# EUROPEAN PATENT APPLICATION

(11) **EP 3 097 782 A1**
(43) Date of publication of application: **30.11.2016**
(21) Application number: 15169941.0
(22) Date of filing: 29.05.2015
(51) Int. Cl.: A01N 43/40, A01N 63/02, A01N 63/04, A01P 5/00

(54) **METHODS FOR CONTROLLING PHYTOPATHOGENIC NEMATODES BY COMBINATION OF FLUOPYRAM AND BIOLOGICAL CONTROL AGENTS**

(71) Applicant: Bayer CropScience Aktiengesellschaft, 40789 Monheim am Rhein (DE)
(72) Inventor: The designation of the inventor has not yet been filed
(74) Representative: BIP Patents

(57) **Abstract**

The present invention relates to the combined use of the nematicide Fluopyram and at least one biological control agent selected from the group consisting of Paecilomyces lilacinus, Paecilomyces lilacinus strain 251, Bacillus firmus, Bacillus firmus strain I-1582 for controlling phytopathogenic nematodes. The invention relates further to a method for controlling phytopathogenic nematodes, which comprises at least two treatment blocks, where in at least one treatment block the plants are treated with at least Fluopyram and in at least one treatment block the plants are treated with at least one biological control agent selected from the group consisting of Paecilomyces lilacinus, Paecilomyces lilacinus strain 251, Bacillus firmus, Bacillus firmus strain I-1582.

## Description

The present invention relates to the combined use of the nematicide Fluopyram and at least one biological control agent selected from the group consisting of Paecilomyces lilacinus, Paecilomyces lilacinus strain 251, Bacillus firmus, Bacillus finnus strain 1-1582 for controlling phytopathogenic nematodes. The invention relates further to a method for controlling phytopathogenic nematodes, which comprises at least two treatment blocks, where in at least one treatment block the plants are treated with at least Fluopyram and in at least one treatment block the plants are treated with at least one biological control agent selected from the group consisting of Paecilomyces lilacinus, Paecilomyces lilacinus strain 251, Bacillus firmus, Bacillus finnus strain I-1582.

### Background

Nematodes are tiny, worm-like, multicellular animals adapted to living in water. The number of nematode species is estimated at half a million. An important part of the soil fauna, nematodes live in a maze of interconnected channels, called pores, that are formed by soil processes. They move in the films of water that cling to soil particles. Plant nematodes encompass plant parasitic nematodes and nematodes living in the soil. Plant-parasitic nematodes, a majority of which are root feeders, are found in association with most plants. Some are endoparasitic, living and feeding within the tissue of the roots, tubers, buds, seeds, etc. Others are ectoparasitic, feeding externally through plant walls. A single endoparasitic nematode can kill a plant or reduce its productivity. Endoparasitic root feeders include such economically important pests as the root-knot nematodes (Meloidogyne species), the reniform nematodes (Rotylenchulus species), the cyst nematodes (Heterodera species), and the root-lesion nematodes (Pratylenchus species). Direct feeding by nematodes can drastically decrease a plant's uptake of nutrients and water. Nematodes have the greatest impact on crop productivity when they attack the roots of seedlings immediately after seed germination. Nematode feeding also creates open wounds that provide entry to a wide variety of plant-pathogenic fungi and bacteria. These microbial infections are often more economically damaging than the direct effects of nematode feeding.

Synthetic active ingredients used in nematode control are often non-specific and therefore can act on organisms other than the target fungus, including other naturally occurring beneficial organisms. Because of their chemical nature, they may also be toxic and non-biodegradable. Consumers world-wide are increasingly conscious of the potential environmental and health problems associated with the residues of chemicals, particularly in food products. This has resulted in growing consumer pressure to reduce the use or at least the quantity of chemical (i.e. synthetic) pesticides. Thus, there is a need to manage food chain requirements whilst still allowing effective pest control.

A further problem arising with the use of synthetic nematicides is that the repeated and exclusive application of a nematicide often leads to selection of resistant nematodes. Normally, such nematode strains are also cross-resistant against other active ingredients having the same mode of action. An effective control of the nematodes with said active compounds is then not possible anymore. However, active ingredients having new mechanisms of action are difficult and expensive to develop.

This risk of resistance development in pathogen populations as well as environmental and human health concerns have fostered interest in identifying alternatives to synthetic nematicides for managing plant diseases caused by nematodes. The use of biological control agents (BCAs) is one such alternative. However, the effectiveness of most BCAs is not at the same high level as for conventional synthetic nematicides, especially in case of severe infection pressure. Paecilomyces lilacinus has been described to infect and assimilate eggs of root-knot and cyst nematodes (Esser and El-Gholl, Nematology Circular 203 (March 1993) of the Fla. Dept. Agric. & Consumer Serv.). Bacillus finnus has been developed and marketed already as biological control agent for nematodes originally by the Israelian company Agrogreen and is available under the brandname Votivo ®. B. firmus affects egg hatch and causes paralysis and mortality by producing bioactive metabolites.

Thus, there is an ongoing need for new methods and combinations for controlling phytopathogenic nematodes in agriculture, horticulture and forestry.

It was therefore an object of the present invention to provide a method for controlling phytopathogenic nematodes which solves the problems of reducing the dosage rate of synthetic nematicides and thus the amount of residues in the crop, which reduces the risk of resistance formation and nevertheless provides sufficient nematode control.

Surprisingly, these objects are achieved by a specific combination of the synthetic nematicide Fluopyram and at least biological control agent selected from the group consisting of Paecilomyces lilacinus, Paecilomyces lilacinus strain 251, Bacillus firmus, Bacillus finnus strain I-1582.

The present invention relates to a method for controlling phytopathogenic nematodes, which method comprises subjecting plants to be protected against nematode attack to at least sequential treatment blocks, where at least one treatment block comprises subjecting the plants to at least one treatment with Fluopyram and at least one treatment block comprises subjecting the plants to at least one treatment with at least one biological control agent selected from the group consisting of Paecilomyces lilacinus, Paecilomyces lilacinus strain 251, Bacillus firmus, Bacillus finnus strain I-1582.

### Definitions

"Synthetic nematicide" refers to nematicides which do not originate from a biological source, but are produced by methods of synthetic chemistry. These are also termed "conventional nematicides" or "chemical nematicides".

Biological control agent refers to the practice of rearing and releasing natural enemies: parasites, predators, or pathogens. A slightly broader definition of "biocontrol" includes any related management activity that is designed to protect or conserve natural enemies (see Course on Biological Control Agent by John R. Meyer, Department of Entomology, North Carolina State University).

"Treatment block" refers to a treatment step which comprises one or more applications of either Fluopyram or at least one biological control agent selected from the group consisting of Paecilomyces lilacinus, Paecilomyces lilacinus strain 251, Bacillus firmus, Bacillus finnus strain I-1582.

The different treatment blocks are distinguished by the type of active compounds used (one treatment block comprises the application of either Fluopyram or at least one biological control agent selected from the group consisting of Paecilomyces lilacinus, Paecilomyces lilacinus strain 251, Bacillus firmus, Bacillus finnus strain 1-1582 and by time (i.e. the different treatment blocks do not overlap). However, if there are more than two treatment blocks, one treatment block may comprise the combined treatment with Fluopyram and at least one BCA, e.g. by applying a mixture of Fluopyram and at least one BCA. It is however preferred that no treatment block comprises the combined treatment with Fluopyram and at least one BCA; in other words it is preferred that each treatment block comprises the application of either the at least Fluopyram or at least one BCA.

The "last" treatment block is that treatment block which is the last nematicidal treatment block in a season, e.g. before, during or latest after harvest (treatment of the crop) or before the plant's death (in case of annual plants).

"Growth stage", as used in the terms of the present invention, refers to growth stages according to the BBCH extended scale (BBCH Makrostadien; Biologische Bundesan- stalt fuer Land-und Forstwirtschaft [BBCH Macrostages; German Federal Biological Research Center for Agriculture and Forestry]; seewww.bba.de/veroeff /bbch/bbcheng.pdf).

Fluopyram is a compound according to formula (I) 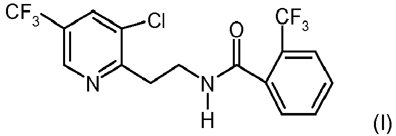 having the chemical name N-{2-[3-chloro-5-(trifluoromethyl)-2-pyridinyl]ethyl}-2-trifluoromethylbenzamide of formula (I). Its production is described in WO-A 2004/16088, its nematicidal activity is described in WO-A 2008/126922.

Paecilomyces lilacinus, in particular Paecilomyces lilacinus strain 251 is known under the tradename BioAct™. Bacillus finnus, in particular Bacillus finnus strain 1-1582 is known under the tradename Votivo™ or Flocter™.

The genus Paecilomyces lilacinus encompasses all Paecilomyces lilacinus strains suitable for controlling phytopathogenic nematodes.

The genus Bacillus firmus encompasses all Bacillus firmus strains suitable for controlling phytopathogenic nematodes.

A "nematicide" as used herein means that the compound is capable of controlling nematodes.

In the context of the present invention, "controlling phytopathogenic nematodes" means a reduction in infestation by phytopathogenic nematodes by killing nematodes or preventing nematodes to develop or to grow on the plant, any plant part, in particular the root system, the seeds, the plant product or the soil surrounding the plant compared with the untreated plant, any untreated plant part, in particular the untreated root system, the untreated seeds, the untreated plant product or the untreated soil in which the plant is intended to grow, grows or has grown. Controlling phytopathogenic nematodes as used herein also encompasses controlling nematode progeny (development of viable cysts and/or egg masses). This activity is measured as efficacy, preferably a reduction by 25-50 %, compared with the untreated plant, any untreated plant part, in particular the untreated root system, the untreated seeds, the untreated plant product or the untreated soil in which the plant is intended to grow, grows or has grown (100 %), more preferably a reduction by 40-79 %, compared with the untreated plant, any untreated plant part, in particular the untreated root system, the untreated seeds, the untreated plant product or the untreated soil in which the plant is intended to grow, grows or has grown (100 %); even more preferably, the infection by phytopathogenic nematodes is entirely suppressed (by 70-100 %). The control may be curative, i.e. for treatment of the already infected plant, any already infected plant parts, in particular already infected roots, the already infected seed of a plant, the already infected plant propagation material, the already infected plant product or the already infected soil in which the plant is intended to grow, grows or has grown. Alternatively the control may be protective, for treatment of the plant, any plant parts, in particular roots, the seed of a plant, the plant propagation material, the plant product or the soil in which the plant is intended to grow, grows or has grown, which have not yet been infected.

"Nematodes" as used herein encompass all species of the order Nematoda and in particular species that are parasitic or cause health problems to plants or to fungi (for example species of the orders Aphelenchida, Meloidogyne, Tylenchida and others) or to humans and animals (for example species of the orders Ascaradida, Oxyurida, Strongylida, Stronglyloides and Trichocephalida).

Preferably, "phytopathogenic nematodes" as used herein, refer to plant nematodes meaning plant parasitic nematodes that cause damage to plants. Plant nematodes encompass plant parasitic nematodes and nematodes living in the soil. Plant parasitic nematodes include, but are not limited to, ectoparasites such as Xiphinema spp., Longidorus spp., and Trichodorus spp.; semiparasites such as Tylenchulus spp.; migratory endoparasites such as Pratylenchus spp., Radopholus spp., and Scutellonerna spp.; sedentary parasites such as Heterodera spp., Globoderal spp., and Meloidogyne spp., and stem and leaf endoparasites such as Ditylenchus spp., Aphelenchoides spp., and Hirshmaniella spp. The methods of treatment described herein are distinguished especially for their effective control of phytopathogenic root parasitic soil nematodes such as, cystforming nematodes of the genera Heterodera or Globodera, and/or root knot nematodes of the genus Meloidogyne. Harmful species of these genera are for example Meloidogyne incognata, Heterodera glycines (soybean cyst nematode), Globodera pallida and Globodera rostochiensis (potato cyst nematode), which species are effectively controlled with the compounds described herein. However, methods of treatment described herein is in no way restricted to these genera or species, but also extends in the same manner to other nematodes.

The methods of treatment described herein may have a broad spectrum activity against various genera and/or strains and/or species of nematodes including but not limited to e.g. Aglenchus agricola, Anguina tritici, Aphelenchoides arachidis, Aphelenchoides fragaria and the stem and leaf endoparasites Aphelenchoides spp. in general, Belonolaimus gracilis, Belonolaimus longicaudatus, Belonolaimus nortoni, Bursaphelenchus eremus, Bursaphelenchus xylophilus and Bursaphelenchus spp. in general, Cacopaurus pestis, Criconemella curvata, Criconemella onoensis, Criconemella ornata, Criconemella rusium, Criconemella xenoplax (= Mesocriconema xenoplax) and Criconemella spp. in general, Criconemoides ferniae, Criconemoides onoense, Criconemoides ornatum and Criconemoides spp. in general, Ditylenchus destructor, Ditylenchus dipsaci, Ditylenchus myceliophagus and the stem and leaf endoparasites Ditylenchus spp. in general, Dolichodorus heterocephalus, Globodera pallida (=Heterodera pallida), Globodera rostochiensis (potato cyst nematode), Globodera solanacearum, Globodera tabacum, Globodera virginia and the sedentary, cyst forming parasites Globodera spp. in general,, Helicotylenchus digonicus, Helicotylenchus dihystera, Helicotylenchus erythrine, Helicotylenchus multicinctus, Helicotylenchus nannus, Helicotylenchus pseudorobustus and Helicotylenchus spp. in general, Hemicriconemoides, Hemicycliophora arenaria, Hemicycliophora nudata, Hemicycliophora parvana, Heterodera avenae, Heterodera cruciferae, Heterodera glycines (soybean cyst nematode), Heterodera oryzae, Heterodera schachtii, Heterodera zeae and the sedentary, cyst forming parasites Heterodera spp. in general, Hirschmaniella gracilis, Hirschmaniella oryzae Hirschmaniella spinicaudata and the stem and leaf endoparasites Hirschmaniella spp. in general, Hoplolaimus aegyptii, Hoplolaimus californicus, Hoplolaimus columbus, Hoplolaimus galeatus, Hoplolaimus indicus, Hoplolaimus magnistylus, Hoplolaimus pararobustus, Longidorus africanus, Longidorus breviannulatus, Longidorus elongatus, Longidorus laevicapitatus, Longidorus vineacola and the ectoparasites Longidorus spp. in general, Meloidogyne acronea, Meloidogyne africana, Meloidogyne arenaria, Meloidogyne arenaria thamesi, Meloidogyne artiella, Meloidogyne chitwoodi, Meloidogyne coffeicola, Meloidogyne ethiopica, Meloidogyne exigua, Meloidogyne graminicola, Meloidogyne graminis, Meloidogyne hapla, Meloidogyne incognita, Meloidogyne incognita acrita, Meloidogyne javanica, Meloidogyne kikuyensis, Meloidogyne naasi, Meloidogyne paranaensis, Meloidogyne thamesi and the sedentary parasites Meloidogyne spp. in general, Meloinema spp., Nacobbus aberrans, Neotylenchus vigissi, Paraphelenchus pseudoparietinus, Paratrichodorus allius, Paratrichodorus lobatus, Paratrichodorus minor, Paratrichodorus nanus, Paratrichodorus porosus, Paratrichodorus teres and Paratrichodorus spp. in general, Paratylenchus hamatus, Paratylenchus minutus, Paratylenchus projectus and Paratylenchus spp. in general, Pratylenchus agilis, Pratylenchus alleni, Pratylenchus andinus, Pratylenchus brachyurus, Pratylenchus cerealis, Pratylenchus coffeae, Pratylenchus crenatus, Pratylenchus delattrei, Pratylenchus giibbicaudatus, Pratylenchus goodeyi, Pratylenchus hamatus, Pratylenchus hexincisus, Pratylenchus loosi, Pratylenchus neglectus, Pratylenchus penetrans, Pratylenchus pratensis, Pratylenchus scribneri, Pratylenchus teres, Pratylenchus thornei, Pratylenchus vulnus, Pratylenchus zeae and the migratory endoparasites Pratylenchus spp. in general, Pseudohalenchus minutus, Psilenchus magnidens, Psilenchus tumidus, Punctodera chalcoensis, Quinisulcius acutus, Radopholus citrophilus, Radopholus similis, the migratory endoparasites Radopholus spp. in general, Rotylenchulus borealis, Rotylenchulus parvus, Rotylenchulus reniformis and Rotylenchulus spp. in general, Rotylenchus laurentinus, Rotylenchus macrodoratus, Rotylenchus robustus, Rotylenchus uniformis and Rotylenchus spp. in general, Scutellonema brachyurum, Scutellonema bradys, Scutellonema clathricaudatum and the migratory endoparasites Scutellonema spp. in general, Subanguina radiciola, Tetylenchus nicotianae, Trichodorus cylindricus, Trichodorus minor, Trichodorus primitivus, Trichodorus proximus, Trichodorus similis, Trichodorus sparsus and the ectoparasites Trichodorus spp. in general, Tylenchorhynchus agri, Tylenchorhynchus brassicae, Tylenchorhynchus clarus, Tylenchorhynchus claytoni, Tylenchorhynchus digitatus, Tylenchorhynchus ebriensis, Tylenchorhynchus maximus, Tylenchorhynchus nudus, Tylenchorhynchus vulgaris and Tylenchorhynchus spp. in general, Tylenchulus semipenetrans and the semiparasites Tylenchulus spp. in general, Xiphinema americanum, Xiphinema brevicolle, Xiphinema.

Examples of nematodes to which a method of treatment of the present invention is applicable include, but are not limited to, nematodes of the genus Meloidogyne such as the southern root-knot nematode (Meloidogyne incognita), Javanese root-knot nematode (Meloidogyne javanica), northern root-knot nematode (Meloidogyne hapla), and peanut root-knot nematode (Meloidogyne arenaria); nematodes of the genus Ditylenchus such as the potato rot nematode (Ditylenchus destructor) and bulb and stem nematode (Ditylenchus dipsaci); nematodes of the genus Pratylenchus such as the cob root-lesion nematode (Pratylenchus penetrans), chrysanthemum root-lesion nematode (Pratylenchus fallax), coffee root-lesion nematode (Pratylenchus coffeae), tea root-lesion nematode (Pratylenchus loosi), and walnut root-lesion nematode (Pratylenchus vulnus); nematodes of the genus Globodera such as the golden nematode (Globodera rostochiensis) and potato cyst nematode (Globodera pallida); nematodes of the genus Heterodera such as the soybean cyst nematode (Heterodera glycines) and sugar beet cyst nematode (Heterodera schachtii); nematodes of the genus Aphelenchoides such as the rice white-tip nematode (Aphelenchoides besseyi), chrysanthemum foliar nematode (Aphelenchoides ritzemabosi), and strawberry nematode (Aphelenchoides fragariae); nematodes of the genus Aphelenchus such as the mycophagous nematode (Aphelenchus avenae); nematodes of the genus Radopholus such as the burrowing nematode (Radopholus similis); nematodes of the genus Tylenchulus such as the citrus nematode (Tylenchulus semipenetrans); nematodes of the genus Rotylenchulus such as the reniform nematode (Rotylenchulus reniformis); nematodes that occur in trees, such as the pine wood nematode (Bursaphelenchus xylophilus), and the like.

### Crops

The useful plants include for example the following types of plants:
Alfafa;
beets, for example sugar beet and fodder beet;
cereals, for example barley, maize/corn, millet/sorghum, oats, rice, rye, triticale, wheat;
cucurbits, for example pumpkin/squash, gherkins, calabashes, cucumbers, zucchini and melons;
fibre plants, for example cotton, flax, hemp, cannabis and jute;
fruits, for example pome fruit, for example apples, pears, quince;
berries, for example Ribesioidae sp. Like strawberries, raspberries, blackberries, blueberries, red and black currant and gooseberry;
citrus fruit, for example oranges, lemons, limes, grapefruit and tangerines;
stone fruit, for example peaches, mangos, nectarines, cherries, plums, common plums, apricots;
legumes, for example beans, lentils, peas, soybeans, green beans, lima beans, snap beans, string beans, Kenia beans;
oil crops, for example Brassica napus (canola, rapeseed, oilseed rape), Brassica rapa, B. juncea (e.g. (field) mustard), Brassica carinata, Arecaceae sp. (e.g. oilpalm, coconut), poppies, olives, sunflowers, coconuts, castor oil plants, cacao and peanuts, Oleaceae sp. (e.g. olive tree, olives);
Malvaceae sp. (e.g. okra, cocoa);
Manihoteae sp. (for instance Manihot esculenta, manioc),
Musaceae sp. (e.g. banana trees, bananas and plantations),
nuts of various botanical taxa such as Juglandaceae sp.(Walnut, Persian Walnut (Juglans regia), Butternut (Juglans), Hickory, Shagbark Hickory, Pecan (Carya), Wingnut (Pterocarya)), Fagaceae sp. (Chestnut (Castanea), Chestnuts, including Chinese Chestnut, Malabar chestnut, Sweet Chestnut, Beech (Fagus), Oak (Quercus), Stone-oak, Tanoak (Lithocarpus)); Betulaceae sp. (Alder (Alnus), Birch (Betula), Hazel, Filbert (Corylus), Hornbeam), Leguminosae sp. (for instance peanuts, peas and beans beans - such as climbing beans and broad beans), Asteraceae sp. (for instance sunflower seed), Almond, Beech, Butternut, Brazil nut, Candlenut, Cashew, Colocynth, Cotton seed, Cucurbita ficifolia, Filbert, Indian Beech or Pongam Tree, Kola nut, Lotus seed, Macadamia, Mamoncillo, Maya nut, Mongongo, Oak acorns, Ogbono nut, Paradise nut, Pili nut, Pine nut, Pistacchio, Pumpkin seed, water Caltrop; soybeans (Glycine sp., Glycine max); Lauraceae, for example avocado, Cinnamomum, camphor;
Solanaceae sp. (for example tomatoes, potatoes, peppers, bell peppers, capsicum, aubergines, eggplant, tobacco),
Rubiaceae sp. (for example coffee);
spices like Ajwain (Trachyspermum ammi), Allspice (Pimenta dioica), Alkanet (Anchusa arvensis), Amchur - mango powder (Mangifera), Angelica (Angelica archangelica), Anise (Pimpinella anisum), Aniseed myrtle (Syzygium anisatum), Annatto (Bixa orellana L.), Apple mint (Mentha suaveolens), Artemisia vulgaris/Mugwort, Asafoetida (Ferula assafoetida), Berberis, Banana, Basil (Ocimum basilicum), Bay leaves, Bistort (Persicaria bistorta"), Black cardamom, Black cumin, Blackcurrant, Black limes, Bladder wrack (Fucus vesiculosus), Blue Cohosh, Blue-leaved Mallee (Eucalyptus polybractea), Bog Labrador Tea (Rhododendron groenlandicum), Boldo (Peumus boldus), Bolivian Coriander (Porophyllum ruderale), Borage (Borago officinalis), Calamus, Calendula, Calumba (Jateorhiza calumba), Chamomile, Candle nut, Cannabis, Caper (Capparis spinosa), Caraway, Cardamom, Carob Pod, Cassia, Casuarina, Catnip, Cat's Claw, Catsear, Cayenne pepper, Celastrus Paniculatus - Herb., Celery salt, Celery seed, Centaury, Chervil (Anthriscus cerefolium), Chickweed, Chicory, Chile pepper, Chili powder, Cinchona, Chives (Allium schoenoprasum), Cicely (Myrrhis odorata), Cilantro (see Coriander) (Coriandrum sativum), Cinnamon (and Cassia), Cinnamon Myrtle (Backhousia myrtifolia), Clary, Cleavers, Clover, Cloves, Coffee, Coltsfoot, Comfrey, Common Rue, Condurango, Coptis, Coriander, Costmary (Tanacetum balsamita), Couchgrass, Cow Parsley (Anthriscus sylvestris), Cowslip, Cramp Bark (Viburnum opulus), Cress, Cuban Oregano (Plectranthus amboinicus), Cudweed, Cumin, Curry leaf (Murraya koenigii), Damiana (Turnera aphrodisiaca, T. diffusa), Dandelion (Taraxacum officinale), Demulcent, Devil's claw (Harpagophytum procumbens), Dill seed, Dill (Anethum graveolens), Dorrigo Pepper (Tasmannia stipitata), Echinacea -, Echinopanax Elatum, Edelweiss, Elderberry, Elderflower, Elecampane, Eleutherococcus senticosus, Emmenagogue, Epazote (Chenopodium ambrosioides), Ephedra -, Eryngium foetidum, Eucalyptus, Fennel (Foeniculum vulgare), Fenugreek, Feverfew, Figwort, File powder, Five-spice powder (Chinese), Fo-ti-tieng, Fumitory, Galangal, Garam masala, Garden cress, Garlic chives, Garlic, Ginger (Zingiber officinale), Ginkgo biloba, Ginseng, Ginseng, Siberian (Eleutherococcus senticosus), Goat's Rue (Galega officinalis), Goada masala, Golden Rod, Golden Seal, Gotu Kola, Grains of paradise (Aframomum melegueta), Grains of Selim (Xylopia aethiopica), Grape seed extract, Green tea, Ground Ivy, Guaco, Gypsywort, Hawthorn (Crataegus sanguinea), Hawthorne Tree, Hemp, Herbes de Provence, Hibiscus, Holly, Holy Thistle, Hops, Horehound, Horseradish, Horsetail (Equisetum telmateia), Hyssop (Hyssopus officinalis), Jalap, Jasmine, Jiaogulan (Gynostemma pentaphyllum), Joe Pye weed (Gravelroot), John the Conqueror, Juniper, Kaffir Lime Leaves (Citrus hystrix, C. papedia), Kaala masala, Knotweed, Kokam, Labrador tea, Lady's Bedstraw, Lady's Mantle, Land cress, Lavender (Lavandula spp.), Ledum, Lemon Balm (Melissa Officinalis), Lemon basil, Lemongrass (Cymbopogon citratus, C. flexuosus, and other species), Lemon Ironbark (Eucalyptus staigeriana), Lemon mint, Lemon Myrtle (Backhousia citriodora), Lemon Thyme, Lemon verbena (Lippia citriodora), Licorice - adaptogen, Lime Flower, Limnophila aromatica, Lingzhi, Linseed, Liquorice, Long pepper, Lovage (Levisticum officinale), Luohanguo, Mace, Mahlab, Malabathrum, Manchurian Thorn Tree (Aralia manchurica)]], Mandrake, Marjoram (Origanum majorana), Marrubium vulgare, Marsh Labrador Tea, Marshmallow, Mastic, Meadowsweet, Mei Yen, Melegueta pepper (Aframomum melegueta), Mint (Mentha spp.), Milk thistle (Silybum), Bergamot (Monarda didyma), Motherwort, Mountain Skullcap, Mullein (Verbascum thapsus), Mustard, Mustard seed, Nashia inaguensis, Neem, Nepeta, Nettle, Nigella sativa, Nigella (Kolanji, Black caraway), Noni, Nutmeg (and Mace) Marijuana, Oenothera (Oenothera biennis et al), Olida (Eucalyptus olida), Oregano (Origanum vulgare, O. heracleoticum, and other species), Orris root, Osmorhiza, Olive Leaf (used in tea and as herbal supplement), Panax quinquefolius, Pandan leaf, Paprika, Parsley (Petroselinum crispum), Passion Flower, Patchouli, Pennyroyal, Pepper (black, white, and green), Peppermint, Peppermint Gum (Eucalyptus dives), Perilla, Plantain, Pomegranate, Ponch phoran, Poppy seed, Primrose (Primula) - candied flowers, tea, Psyllium, Purslane, Quassia, Quatre épices, Ramsons, Ras el-hanout, Raspberry (leaves), Reishi, Restharrow, Rhodiola rosea, Riberry (Syzygium luehmannii), Rocket/Arugula, Roman chamomile, Rooibos, Rosehips, Rosemary (Rosmarinus officinalis), Rowan Berries, Rue, Safflower, Saffron, Sage (Salvia officinalis), Saigon Cinnamon, St John's Wort, Salad Burnet (Sanguisorba minor or Poterium sanguisorba), Salvia, Sichuan Pepper (Sansho), Sassafras, Savory (Satureja hortensis, S. Montana), Schisandra (Schisandra chinensis), Scutellaria costaricana, Senna (herb), Senna obtusifolia, Sesame seed, Sheep Sorrel, Shepherd's Purse, Sialagogue, Siberian Chaga, Siberian ginseng (Eleutherococcus senticosus), Siraitia grosvenorii (luohanguo), Skullcap, Sloe Berries, Smudge Stick, Sonchus, Sorrel (Rumex spp.), Southernwood, Spearmint, Speedwell, Squill, Star anise, Stevia, Strawberry Leaves, Suma (Pfaffia paniculata), Sumac, Summer savory, Sutherlandia frutescens, Sweet grass, Sweet cicely (Myrrhis odorata), Sweet woodruff, Szechuan pepper (Xanthoxylum piperitum), Tacamahac, Tamarind, Tandoori masala, Tansy, Tarragon (Artemisia dracunculus), Tea, Teucrium polium, Thai basil, Thistle, Thyme, Toor Dall, Tonnentil, Tribulus terrestris, Tulsi (Ocimum tenuiflorum), Turmeric (Curcuma longa), Uva Ursi also known as Bearberry, Vanilla (Vanilla planifolia), Vasaka, Vervain, Vetiver, Vietnamese Coriander (Persicaria odorata), Wasabi (Wasabia japonica), Watercress, Wattleseed, Wild ginger, Wild Lettuce, Wild thyme, Winter savory, Witch Hazel, Wolfberry, Wood Avens, Wood Betony, Woodruff, Wormwood, Yarrow, Yerba Buena, Yohimbe, Za'atar, Zedoary Root.
Stevia rebaudiana;
Sugarcane
Theobroma sp. (for example Theobroma cacao: cocoa)
vegetables, for example
leafy vegetables such as spinach, lettuce,
root vegetables such as carrot, ginseng, sweet potatoes, celery and celeriac
bulb vegetables such as onions, garlic, shallots,
fruiting vegetables such as Solanaceae, chili, okra,
legumes such as green beans, lima beans, snap beans, string beans, Kenia beans,
Asparagaceae (e.g. asparagus),
Cruciferae sp. (e.g. white cabbage, red cabbage, broccoli, cauliflower, Brussels sprouts, pak choi, kohlrabi, radishes, horseradish, cress and chinese cabbage), bell peppers, artichokes and chicory - including root chicory, endive or common chicory, leeks;
Umbelliferae sp. (e.g. parsley);
Vitis sp. (for example Vitis vinifera: grape vine, raisins, table grapes)
or else plants such as turf, sugar cane, tea (Camellia sinensis), hops, and ornamentals, for example flowers, shrubs, deciduous trees and coniferous trees. This enumeration is no limitation.

Examples of trees are: Abies sp., Eucalyptus sp., Picea sp., Pinus sp., Aesculus sp., Platanus sp., Tilia sp., Acer sp., Tsuga sp., Fraxinus sp., Sorbus sp., Betula sp., Crataegus sp., Ulmus sp., Quercus sp., Fagus sp., Salix sp., Populus sp..

The following plants are considered to be particularly suitable target crops: bananas, bulb vegetables, cereals, citrus fruit, cucurbits, Cruciferae sp., fibre plants, flowers, leafy vegetables, legumes, nuts, oil crops, ornamentals, pome fruit, root vegetables, Solanaceae, stone fruit, Vitis sp..

The following plants are considered to be particularly suitable target crops: bananas, bulb vegetables being onions, garlic, shallots, cereals being barley, maize/corn, millet/sorghum, oats, rice, rye, triticale, wheat, citrus fruits being oranges, lemons, limes, grapefruit and tangerines, cucurbits being pumpkin/squash, gherkins, calabashes, cucumbers, zucchini and melons, Cruciferae sp. being white cabbage, red cabbage, broccoli, cauliflower, Brussels sprouts, pak choi, kohlrabi, radishes, horseradish, cress, chinese cabbage, bell peppers, artichokes chicory, root chicory, endive, common chicory, leeks, fibre plants being cotton, flax, hemp, cannabis and jute, flowers, leafy vegetables being spinach, lettuce, legumes being beans, lentils, peas, soybeans, green beans, lima beans, snap beans, string beans, Kenia beans, nuts being almonds, cashew, hazelnuts, pistachio, walnut, oil crops being canola, rapeseed, oilseed rape, Brassica rapa, B. juncea, Brassica carinata, oilpalm, coconut, poppies, olives, sunflowers, coconuts, castor oil plants, cacao and peanuts, ornamentals, pome fruit being apples, pears, quinces, root vegetables being carrot, ginseng, sweet potatoes, celery and celeriac, Solanaceae being tomatoes, potatoes, peppers, bell peppers, capsicum, aubergines, eggplant, tobacco, stone fruit being peaches, mangos, nectarines, cherries, plums, common plums, apricots, Vitis sp being grapevine, vine, raisins.

Pretreatment is defined to be the treatment of the environment in which the crops will grow for example the soil before the crop is planted. The pretreatment is achieved for example by drip and drench, soil injection or spray application methods.

Transplanting is defined as the planting of germinated and/or pre-grown crops between BBCH stages 00 to 05, preferably 01 to 04, most preferably 02 to 03 into the environment in which the crops will grow, for example the soil.

### Preferred Embodiments

The above and the following observations made with regard to preferred features of the invention apply by themselves, but also in combination with other preferred features.

In the method of the invention, a treatment block is carried out only after the preceding treatment block has been finished, i.e. the second treatment block is carried out only after the first treatment block has been finished, the third treatment block, if existent, is carried out only after the second treatment block has been finished, etc.

In a treatment block which comprises subjecting the plants to at least one treatment with Fluopyram, no BCA is applied. In a treatment block which comprises subjecting the plants to at least one treatment with at least one BCA selected from the group consisting of Paecilomyces lilacinus, Paecilomyces lilacinus strain 251, Bacillus firmus, Bacillus finnus strain 1-1582, no Fluopyram is applied.

In one aspect the respective treatment blocks are carried out during different growth stages of the plants. The growth stages are defined according the BBCH scale either for the specific plant or plant group or according to the general extended scale. In other words, the time interval between the subsequent treatment blocks is preferably such that the plants are in different growth stages when being subjected to the respective treatment blocks, i.e. the first, the second, etc. treatment blocks are carried out during non-overlapping growth stages of the plants, the first treatment block of course being carried out at earlier growth stages than the second, etc.

### Two treatments : erst FLU dann BCA

In one aspect, the method of the invention comprises two treatment blocks. Thus, in one aspect a method for controlling phytopathogenic nematodes is described, which method comprises subjecting plants to be protected against nematode attack to two sequential treatment blocks, where the first treatment block comprises subjecting the plants to at least one treatment with Fluopyram and the second, subsequent treatment block comprises subjecting the plants to at least one treatment with at least one biological control agent selected from the group consisting of Paecilomyces lilacinus, Paecilomyces lilacinus strain 251, Bacillus firmus, Bacillus firmus strain I-1582.

In one aspect, the method of the invention comprises two treatment blocks. Thus, in one aspect a method for controlling phytopathogenic nematodes is described, which method comprises subjecting plants to be protected against nematode attack to two sequential treatment blocks, where the first treatment block comprises subjecting the plants to one treatment with Fluopyram and the second, subsequent treatment block comprises subjecting the plants to one treatment with one biological control agent selected from the group consisting of Paecilomyces lilacinus, Paecilomyces lilacinus strain 251, Bacillus firmus, Bacillus finnus strain I-1582.

In another aspect, the method of the invention comprises two treatment blocks. Thus, in one aspect a method for controlling phytopathogenic nematodes is described, which method comprises subjecting plants to be protected against nematode attack to two sequential treatment blocks, where the first treatment block comprises subjecting the plants to at least one treatment with at least one biological control agent selected from the group consisting of Paecilomyces lilacinus, Paecilomyces lilacinus strain 251, Bacillus firmus, Bacillus firmus strain 1-1582 and the second, subsequent treatment block comprises subjecting the plants to at least one treatment with Fluopyram.

In another aspect, the method of the invention comprises two treatment blocks. Thus, in one aspect a method for controlling phytopathogenic nematodes is described, which method comprises subjecting plants to be protected against nematode attack to two sequential treatment blocks, where the first treatment block comprises subjecting the plants to one treatment one biological control agent selected from the group consisting of Paecilomyces lilacinus, Paecilomyces lilacinus strain 251, Bacillus firmus, Bacillus firmus strain 1-1582 and the second, subsequent treatment block comprises subjecting the plants to one treatment with Fluopyram.

In case of the embodiment in which the method comprises two treatment blocks, in one aspect the time interval between the first and the second treatment block is such that the plants are in different growth stages when being subjected to the first and the second treatment blocks, respectively, i.e. the first and the second treatment blocks are preferably carried out during non-overlapping growth stages of the plants, the first treatment block of course being carried out at earlier growth stages.

In one aspect, the first treatment block is defined to be a pretreatment block in which the environment, in which the plant will grow, in particular the soil, is treated before emerging or transplanting of the crop and the second treatment block begins earliest at or after transplantation of the plants or when the plants are in growth stage 11, preferably at stage 12, even more preferred at growth stage 20. As already pointed out, a subsequent block is always and mandatorily carried out after completion of the preceding block. The most suitable point of time for the treatment depends, inter alia, from the plant to be treated.

More preferably, the first treatment block ends latest when the plants have been transplanted or seeded and the last treatment block, which is preferably the second treatment block, begins earliest at or after transplantation of the plants or when the plants are in growth stage 11. The last treatment block, which is preferably the second treatment block, is carried out at or after transplantation of the plants or when the plants are in the growth stage 11 to 24, preferably 11 to 16 or 20 to 24, more preferably 12 to 14. The most suitable point of time for the treatment depends, inter alia, from the plant to be treated.

In one aspect, the first treatment block is defined to be a pretreatment block in which the environment, in which the plant will grow, in particular the soil, is treated with at least one biological control agent selected from the group consisting of Paecilomyces lilacinus, Paecilomyces lilacinus strain 251, Bacillus finnus, Bacillus firmus strain 1-1582 before emerging or transplanting of the crop and the second treatment block with at least one treatment of Fluopyram begins earliest at or after transplantation of the plants or when the plants are in growth stage 11, preferably at stage 12, even more preferred at growth stage 20. As already pointed out, a subsequent block is always and mandatorily carried out after completion of the preceding block. The most suitable point of time for the treatment depends, inter alia, from the plant to be treated.

More preferably, the first treatment block with at least one biological control agent selected from the group consisting of Paecilomyces lilacinus, Paecilomyces lilacinus strain 251, Bacillus firmus, Bacillus finnus strain I-1582 ends latest when the plants have been transplanted or seeded and the last treatment block with Fluopyram, which is preferably the second treatment block, begins earliest at or after transplantation of the plants or when the plants are in growth stage 11. The last treatment block, which is preferably the second treatment block, is carried out earliest at or after transplantation of the plants or when the plants are in the growth stage 11 to 24, preferably 11 to 16 or 20 to 24, more preferably 12 - 14. The most suitable point of time for the treatment depends, inter alia, from the plant to be treated.

In one aspect, the first treatment block is defined to be a pretreatment block in which the environment, in which the plant will grow, in particular the soil, is treated with at least one biological control agent selected from the group consisting of Paecilomyces lilacinus, Paecilomyces lilacinus strain 251, Bacillus finnus, Bacillus finnus strain 1-1582 before emerging or transplanting of the crop and the second treatment block with two, three, four or five treatments of Fluopyram begins earliest at or after transplantation of the plants or when the plants are in growth stage 11, preferably at stage 12, even more preferred at growth stage 20. As already pointed out, a subsequent block is always and mandatorily carried out after completion of the preceding block. The most suitable point of time for the treatment depends, inter alia, from the plant to be treated.

More preferably, the first treatment block with at least one biological control agent selected from the group consisting of Paecilomyces lilacinus, Paecilomyces lilacinus strain 251, Bacillus firmus, Bacillus finnus strain I-1582 ends latest when the plants have been transplanted or seeded and the last treatment block with Fluopyram being applied two, three, four or five times, which is preferably the second treatment block, begins earliest at or after transplantation of the plants or when the plants are in growth stage 11. The last treatment block, which is preferably the second treatment block, is carried out when the plants are in the growth stage 11 to 24, preferably 11 to 16 or 20 to 24, more preferably 12 to 14. The most suitable point of time for the treatment depends, inter alia, from the plant to be treated.

In one aspect, the first treatment block is defined to be a pretreatment block in which the environment, in which the plant will grow, in particular the soil, is treated two-, three-, four- or fivefold with at least one biological control agent selected from the group consisting of Paecilomyces lilacinus, Paecilomyces lilacinus strain 251, Bacillus firmus, Bacillus finnus strain 1-1582 before emerging or transplanting of the crop and the second treatment block with at least one treatment of Fluopyram begins earliest at or after transplantation of the plants or when the plants are in growth stage 11, preferably at stage 12, even more preferred at growth stage 20. As already pointed out, a subsequent block is always and mandatorily carried out after completion of the preceding block. The most suitable point of time for the treatment depends, inter alia, from the plant to be treated.

More preferably, the first treatment block is defined to be a pretreatment block in which the environment, in which the plant will grow, in particular the soil, is treated two-, three-, four- or fivefold with at least one biological control agent selected from the group consisting of Paecilomyces lilacinus, Paecilomyces lilacinus strain 251, Bacillus firmus, Bacillus finnus strain 1-1582 ends latest when the plants have been transplanted or seeded and the last treatment block with at least one treatment of Fluopyram, which is preferably the second treatment block, begins earliest at or after transplantation of the plants or when the plants are in growth stage 11. The last treatment block, which is preferably the second treatment block, is carried out when the plants are in the growth stage 11 to 24, preferably 11 to 16 or 20 to 24, more preferably 12 to 14. The most suitable point of time for the treatment depends, inter alia, from the plant to be treated.

In one aspect, the first treatment block is defined to be a pretreatment block in which the environment, in which the plant will grow, in particular the soil, is treated two-, three-, four- or fivefold with Fluopyram before emerging or transplanting of the crop and the second treatment block with at least one treatment of at least one biological control agent selected from the group consisting of Paecilomyces lilacinus, Paecilomyces lilacinus strain 251, Bacillus firmus, Bacillus firmus strain 1-1582 begins earliest at or after transplantation of the plants or when the plants are in growth stage 11, preferably at stage 12, even more preferred at growth stage 20. As already pointed out, a subsequent block is always and mandatorily carried out after completion of the preceding block. The most suitable point of time for the treatment depends, inter alia, from the plant to be treated.

More preferably, the first treatment block is defined to be a pretreatment block in which the environment, in which the plant will grow, in particular the soil, is treated two-, three-, four- or fivefold with Fluopyram ends latest when the plants have been transplanted or seeded and the last treatment block with at least one treatment of at least one biological control agent selected from the group consisting of Paecilomyces lilacinus, Paecilomyces lilacinus strain 251, Bacillus firmus, Bacillus finnus strain I-1582, which is preferably the second treatment block, begins earliest at or after transplantation of the plants or when the plants are in growth stage 11. The last treatment block, which is preferably the second treatment block, is carried out when the plants are in the growth stage 11 to 24, preferably 11 to 16 or 20 to 24, more preferably 12 - 14. The most suitable point of time for the treatment depends, inter alia, from the plant to be treated.

In one aspect, the first treatment block is defined to be a pretreatment block in which the environment, in which the plant will grow, in particular the soil, is treated at least once with Fluopyram before emerging or transplanting of the crop and the second treatment block with two, three, four or five treatments of at least one biological control agent selected from the group consisting of Paecilomyces lilacinus, Paecilomyces lilacinus strain 251, Bacillus firmus, Bacillus finnus strain 1-1582 begins earliest at or after transplantation of the plants or when the plants are in growth stage 11, preferably at stage 12, even more preferred at growth stage 20. As already pointed out, a subsequent block is always and mandatorily carried out after completion of the preceding block. The most suitable point of time for the treatment depends, inter alia, from the plant to be treated.

More preferably, the first treatment block is defined to be a pretreatment block in which the environment, in which the plant will grow, in particular the soil, is treated at least once with Fluopyram ends latest when the plants have been transplanted or seeded and the last treatment block with two, three, four or five treatments of at least one biological control agent selected from the group consisting of Paecilomyces lilacinus, Paecilomyces lilacinus strain 251, Bacillus firmus, Bacillus finnus strain 1-1582, which is preferably the second treatment block, begins earliest at or after transplantation of the plants or when the plants are in growth stage 11. The last treatment block, which is preferably the second treatment block, is carried out when the plants are in the growth stage 11 to 24, preferably 11 to 16 or 20 to 24, more preferably 12 to 14. The most suitable point of time for the treatment depends, inter alia, from the plant to be treated.

In another embodiment, the first treatment block ends latest when the plants have been transplanted or seeded and the last treatment block, which is preferably the second treatment block, begins earliest at or after transplantation of the plants or when the plants are in growth stage 12. The last treatment block, which is preferably the second treatment block, is carried out at or after transplantation of the plants or when the plants are in the growth stage 12 to 70, preferably 16 to 60. The most suitable point of time for the treatment depends, inter alia, from the plant to be treated.

In one aspect, the first treatment block is defined to be a pretreatment block in which the environment, in which the plant will grow, in particular the soil, is treated with at least one biological control agent selected from the group consisting of Paecilomyces lilacinus, Paecilomyces lilacinus strain 251, Bacillus finnus, Bacillus finnus strain 1-1582 one-, two-, three-, four- or fivefold before emerging or transplanting of the crop and the second treatment block with one, two, three, four or five treatments of Fluopyram begins earliest at or after transplantation of the plants or when the plants are in growth stage 12, preferably at stage 16. As already pointed out, a subsequent block is always and mandatorily carried out after completion of the preceding block. The most suitable point of time for the treatment depends, inter alia, from the plant to be treated.

In one aspect, the first treatment block is defined to be a pretreatment block in which the environment, in which the plant will grow, in particular the soil, is treated with Fluopyram one-, two-, three-, four- or fivefold before emerging or transplanting of the crop and the second treatment block with one, two, three, four or five treatments of at least one biological control agent selected from the group consisting of Paecilomyces lilacinus, Paecilomyces lilacinus strain 251, Bacillus finnus, Bacillus finnus strain 1-1582 begins earliest at or after transplantation of the plants or when the plants are in growth stage 12, preferably at stage 16. As already pointed out, a subsequent block is always and mandatorily carried out after completion of the preceding block. The most suitable point of time for the treatment depends, inter alia, from the plant to be treated.

In one aspect, the first treatment block is defined to be a pretreatment block in which the environment, in which the plant will grow, in particular the soil, is treated with one biological control agent selected from the group consisting of Paecilomyces lilacinus, Paecilomyces lilacinus strain 251, Bacillus firmus, Bacillus finnus strain 1-1582 once before emerging or transplanting of the crop and the second treatment block with one treatment of Fluopyram begins earliest at or after transplantation of the plants or when the plants are in growth stage 12, preferably at stage 16. As already pointed out, a subsequent block is always and mandatorily carried out after completion of the preceding block. The most suitable point of time for the treatment depends, inter alia, from the plant to be treated.

In one aspect, the first treatment block is defined to be a pretreatment block in which the environment, in which the plant will grow, in particular the soil, is treated with Fluopyram once before emerging or transplanting of the crop and the second treatment block with one biological control agent selected from the group consisting of Paecilomyces lilacinus, Paecilomyces lilacinus strain 251, Bacillus firmus, Bacillus finnus strain 1-1582 begins earliest at or after transplantation of the plants or when the plants are in growth stage 12, preferably at stage 16. As already pointed out, a subsequent block is always and mandatorily carried out after completion of the preceding block. The most suitable point of time for the treatment depends, inter alia, from the plant to be treated.

### Three treatment block

In one aspect, the method of the invention comprises three treatment blocks. Thus, the invention preferably relates to a method for controlling phytopathogenic nematodes, which method comprises subjecting plants to be protected against nematode attack to three sequential treatment blocks, where two of the three treatment blocks comprise subjecting the plants to one treatment with at least one biological control agent selected from the group consisting of Paecilomyces lilacinus, Paecilomyces lilacinus strain 251, Bacillus firmus, Bacillus firmus strain 1-1582 and the remaining treatment block comprises subjecting the plants to a treatment with Fluopyram.

In one aspect a method for controlling phytopathogenic nematodes is described, which method comprises subjecting plants to be protected against nematode attack to three sequential treatment blocks, where the first and the third subsequent of the three treatment blocks comprise subjecting the plants to one treatment with at least one biological control agent selected from the group consisting of Paecilomyces lilacinus, Paecilomyces lilacinus strain 251, Bacillus firmus, Bacillus finnus strain 1-1582 and the second treatment block comprises subjecting the plants to a treatment with Fluopyram.

In case of the embodiment in which the method comprises three treatment blocks, preferably the time interval between the first, the second and the third treatment block is such that the plants are in different growth stages when being subjected to the first, the second and the third treatment blocks, respectively, i.e. the first, the second and the third treatment blocks are preferably carried out during non-overlapping growth stages of the plants, the first treatment block of course being carried out at earlier growth stages.

In one aspect a method for controlling phytopathogenic nematodes is described, which method comprises subjecting plants to be protected against nematode attack to three sequential treatment blocks, where the second and the third subsequent of the three treatment blocks comprise subjecting the plants to one treatment with at least one biological control agent selected from the group consisting of Paecilomyces lilacinus, Paecilomyces lilacinus strain 251, Bacillus firmus, Bacillus finnus strain 1-1582 and the first treatment block comprises subjecting the plants to a treatment with Fluopyram.

In case of the embodiment in which the method comprises three treatment blocks, preferably the time interval between the first, the second and the third treatment block is such that the plants are in different growth stages when being subjected to the first, the second and the third treatment blocks, respectively, i.e. the first, the second and the third treatment blocks are preferably carried out during non-overlapping growth stages of the plants, the first treatment block of course being carried out at earlier growth stages.

In one aspect, the method of the invention comprises four treatment blocks. Thus, the invention preferably relates to a method for controlling phytopathogenic nematodes, which method comprises subjecting plants to be protected against nematode attack to four sequential treatment blocks, where three of the four treatment blocks comprise subjecting the plants to one treatment with at least one biological control agent selected from the group consisting of Paecilomyces lilacinus, Paecilomyces lilacinus strain 251, Bacillus firmus, Bacillus firmus strain 1-1582 and the remaining treatment block comprises subjecting the plants to a treatment with Fluopyram.

In one aspect, the method of the invention comprises four treatment blocks. Thus, the invention preferably relates to a method for controlling phytopathogenic nematodes, which method comprises subjecting plants to be protected against nematode attack to four sequential treatment blocks, where two of the four treatment blocks comprise subjecting the plants to one treatment with at least one biological control agent selected from the group consisting of Paecilomyces lilacinus, Paecilomyces lilacinus strain 251, Bacillus firmus, Bacillus firmus strain 1-1582 and the remaining two treatment block comprises subjecting the plants to a treatment with Fluopyram.

In one aspect a method for controlling phytopathogenic nematodes is described, which method comprises subjecting plants to be protected against nematode attack to four sequential treatment blocks, where the first, third and fourth subsequent of the four treatment blocks comprise subjecting the plants to one treatment with at least one biological control agent selected from the group consisting of Paecilomyces lilacinus, Paecilomyces lilacinus strain 251, Bacillus firmus, Bacillus finnus strain 1-1582 and the second treatment block comprises subjecting the plants to a treatment with Fluopyram.

In case of the embodiment in which the method comprises four treatment blocks, preferably the time interval between the first, the second and the third treatment block is such that the plants are in different growth stages when being subjected to the first, the second and the third treatment blocks, respectively, i.e. the first, the second, third and the fourth treatment blocks are preferably carried out during non-overlapping growth stages of the plants, the first treatment block of course being carried out at earlier growth stages.

In one aspect, in the method of the invention
Fluopyram is applied sequentially together with Paecilomyces lilacinus; or
Fluopyram is applied sequentially together with Paecilomyces lilacinus strain 251; or
Fluopyram is applied sequentially together with Bacillus firmus; or
Fluopyram is applied sequentially together with Bacillus finnus strain 1-1582; or
Fluopyram is applied sequentially together with Paecilomyces lilacinus and Bacillus firmus ; or
Fluopyram is applied sequentially together with Paecilomyces lilacinus strain 251 and Bacillus firmus; or Fluopyram is applied sequentially together with Bacillus firmus and Paecilomyces lilacinus; or
Fluopyram is applied sequentially together with Bacillus finnus strain 1-1582 and Paecilomyces lilacinus strain 251.

In one aspect, in the different embodiments of the method as described herein Fluopyram is applied sequentially together with Paecilomyces lilacinus for the treatment of bananas, bulb vegetables being onions, garlic, shallots, cereals being barley, maize/corn, millet/sorghum, oats, rice, rye, triticale, wheat, citrus fruits being oranges, lemons, limes, grapefruit and tangerines, cucurbits being pumpkin/squash, gherkins, calabashes, cucumbers, zucchini and melons, Cruciferae sp. being white cabbage, red cabbage, broccoli, cauliflower, Brussels sprouts, pak choi, kohlrabi, radishes, horseradish, cress, chinese cabbage, bell peppers, artichokes chicory, root chicory, endive, common chicory, leeks, fibre plants being cotton, flax, hemp, cannabis and jute, flowers, leafy vegetables being spinach, lettuce, legumes being beans, lentils, peas, soybeans, green beans, lima beans, snap beans, string beans, Kenia beans, nuts being almonds, cashew, hazelnuts, pistachio, walnut, oil crops being canola, rapeseed, oilseed rape, Brassica rapa, B. juncea, Brassica carinata, oilpalm, coconut, poppies, olives, sunflowers, coconuts, castor oil plants, cacao and peanuts, ornamentals, pome fruit being apples, pears, quinces, root vegetables being carrot, ginseng, sweet potatoes, celery and celeriac, Solanaceae being tomatoes, potatoes, peppers, bell peppers, capsicum, aubergines, eggplant, tobacco, stone fruit being peaches, mangos, nectarines, cherries, plums, common plums, apricots, Vitis sp being grapevine, vine, raisins.; or

Fluopyram is applied sequentially together with Paecilomyces lilacinus strain 251 for the treatment of bananas, bulb vegetables being onions, garlic, shallots, cereals being barley, maize/corn, millet/sorghum, oats, rice, rye, triticale, wheat, citrus fruits being oranges, lemons, limes, grapefruit and tangerines, cucurbits being pumpkin/squash, gherkins, calabashes, cucumbers, zucchini and melons, Cruciferae sp. being white cabbage, red cabbage, broccoli, cauliflower, Brussels sprouts, pak choi, kohlrabi, radishes, horseradish, cress, chinese cabbage, bell peppers, artichokes chicory, root chicory, endive, common chicory, leeks, fibre plants being cotton, flax, hemp, cannabis and jute, flowers, leafy vegetables being spinach, lettuce, legumes being beans, lentils, peas, soybeans, green beans, lima beans, snap beans, string beans, Kenia beans, nuts being almonds, cashew, hazelnuts, pistachio, walnut, oil crops being canola, rapeseed, oilseed rape, Brassica rapa, B. juncea, Brassica carinata, oilpalm, coconut, poppies, olives, sunflowers, coconuts, castor oil plants, cacao and peanuts, ornamentals, pome fruit being apples, pears, quinces, root vegetables being carrot, ginseng, sweet potatoes, celery and celeriac, Solanaceae being tomatoes, potatoes, peppers, bell peppers, capsicum, aubergines, eggplant, tobacco, stone fruit being peaches, mangos, nectarines, cherries, plums, common plums, apricots, Vitis sp being grapevine, vine, raisins.; or

Fluopyram is applied sequentially together with Bacillus finnus for the treatment of bananas, bulb vegetables being onions, garlic, shallots, cereals being barley, maize/corn, millet/sorghum, oats, rice, rye, triticale, wheat, citrus fruits being oranges, lemons, limes, grapefruit and tangerines, cucurbits being pumpkin/squash, gherkins, calabashes, cucumbers, zucchini and melons, Cruciferae sp. being white cabbage, red cabbage, broccoli, cauliflower, Brussels sprouts, pak choi, kohlrabi, radishes, horseradish, cress, chinese cabbage, bell peppers, artichokes chicory, root chicory, endive, common chicory, leeks, fibre plants being cotton, flax, hemp, cannabis and jute, flowers, leafy vegetables being spinach, lettuce, legumes being beans, lentils, peas, soybeans, green beans, lima beans, snap beans, string beans, Kenia beans, nuts being almonds, cashew, hazelnuts, pistachio, walnut, oil crops being canola, rapeseed, oilseed rape, Brassica rapa, B. juncea, Brassica carinata, oilpalm, coconut, poppies, olives, sunflowers, coconuts, castor oil plants, cacao and peanuts, ornamentals, pome fruit being apples, pears, quinces, root vegetables being carrot, ginseng, sweet potatoes, celery and celeriac, Solanaceae being tomatoes, potatoes, peppers, bell peppers, capsicum, aubergines, eggplant, tobacco, stone fruit being peaches, mangos, nectarines, cherries, plums, common plums, apricots, Vitis sp being grapevine, vine, raisins.; or

Fluopyram is applied sequentially together with Bacillus firmus strain 1-1582 for the treatment of bananas, bulb vegetables being onions, garlic, shallots, cereals being barley, maize/corn, millet/sorghum, oats, rice, rye, triticale, wheat, citrus fruits being oranges, lemons, limes, grapefruit and tangerines, cucurbits being pumpkin/squash, gherkins, calabashes, cucumbers, zucchini and melons, Cruciferae sp. being white cabbage, red cabbage, broccoli, cauliflower, Brussels sprouts, pak choi, kohlrabi, radishes, horseradish, cress, chinese cabbage, bell peppers, artichokes chicory, root chicory, endive, common chicory, leeks, fibre plants being cotton, flax, hemp, cannabis and jute, flowers, leafy vegetables being spinach, lettuce, legumes being beans, lentils, peas, soybeans, green beans, lima beans, snap beans, string beans, Kenia beans, nuts being almonds, cashew, hazelnuts, pistachio, walnut, oil crops being canola, rapeseed, oilseed rape, Brassica rapa, B. juncea, Brassica carinata, oilpalm, coconut, poppies, olives, sunflowers, coconuts, castor oil plants, cacao and peanuts, ornamentals, pome fruit being apples, pears, quinces, root vegetables being carrot, ginseng, sweet potatoes, celery and celeriac, Solanaceae being tomatoes, potatoes, peppers, bell peppers, capsicum, aubergines, eggplant, tobacco, stone fruit being peaches, mangos, nectarines, cherries, plums, common plums, apricots, Vitis sp being grapevine, vine, raisins.; or .

Fluopyram is applied sequentially together with Bacillus firmus strain 1-1582 and/or Paecilomyces lilacinus strain 251 for the treatment of bananas, bulb vegetables being onions, garlic, shallots, cereals being barley, maize/corn, millet/sorghum, oats, rice, rye, triticale, wheat, citrus fruits being oranges, lemons, limes, grapefruit and tangerines, cucurbits being pumpkin/squash, gherkins, calabashes, cucumbers, zucchini and melons, Cruciferae sp. being white cabbage, red cabbage, broccoli, cauliflower, Brussels sprouts, pak choi, kohlrabi, radishes, horseradish, cress, chinese cabbage, bell peppers, artichokes chicory, root chicory, endive, common chicory, leeks, fibre plants being cotton, flax, hemp, cannabis and jute, flowers, leafy vegetables being spinach, lettuce, legumes being beans, lentils, peas, soybeans, green beans, lima beans, snap beans, string beans, Kenia beans, nuts being almonds, cashew, hazelnuts, pistachio, walnut, oil crops being canola, rapeseed, oilseed rape, Brassica rapa, B. juncea, Brassica carinata, oilpalm, coconut, poppies, olives, sunflowers, coconuts, castor oil plants, cacao and peanuts, ornamentals, pome fruit being apples, pears, quinces, root vegetables being carrot, ginseng, sweet potatoes, celery and celeriac, Solanaceae being tomatoes, potatoes, peppers, bell peppers, capsicum, aubergines, eggplant, tobacco, stone fruit being peaches, mangos, nectarines, cherries, plums, common plums, apricots, Vitis sp being grapevine, vine, raisins..

Disclosure of concrete application sequences :
In one aspect the method comprises two treatment blocks, wherein the first treatment block treating the crops with Bacillus finnus is carried out as a pretreatment before seeding or transplanting, the second treatment block treating the crops with Fluopyram is carried out at or after transplanting, at emergence or when the plants are in the growth stage 11 to 24, preferably, 11 to 16, most preferably 12 to 14 or 20 to 24.
In one aspect the method comprises two treatment blocks, wherein the first treatment block treating the crops with Bacillus finnus strain 1-1582 is carried out as a pretreatment before seeding or transplanting, the second treatment block treating the crops with Fluopyram is carried out at or after transplanting, at emergence or when the plants are in the growth stage 11 to 24, preferably, 11 to 16, most preferably 12 to 14 or 20 to 24.
In one aspect the method comprises two treatment blocks, wherein the first treatment block treating the crops with Paecilomyces lilacinus is carried out as a pretreatment before seeding or transplanting, the second treatment block treating the crops with Fluopyram is carried out at or after transplanting, at emergence or when the plants are in the growth stage 11 to 24, preferably, 11 to 16, most preferably 12 to 14 or 20 to 24.
In one aspect the method comprises two treatment blocks, wherein the first treatment block treating the crops with Paecilomyces lilacinus strain 251 is carried out as a pretreatment before seeding or transplanting, the second treatment block treating the crops with Fluopyram is carried out at or after transplanting, at emergence or when the plants are in the growth stage 11 to 24, preferably, 11 to 16, most preferably 12 to 14 or 20 to 24.
In one aspect the method comprises two treatment blocks, wherein the first treatment block treating the crops with Fluopyram is carried out as a pretreatment before seeding or transplanting, the second treatment block treating the crops with Bacillus firmus is carried out at or after transplanting, at emergence or when the plants are in the growth stage 11 to 24, preferably, 11 to 16, most preferably 12 to 14 or 20 to 24.
In one aspect the method comprises two treatment blocks, wherein the first treatment block treating the crops with Fluopyram is carried out as a pretreatment before seeding or transplanting, the second treatment block treating the crops with Bacillus finnus strain 1-1582 is carried out at or after transplanting, at emergence or when the plants are in the growth stage 11 to 24, preferably, 11 to 16, most preferably 12 to 14 or 20 to 24.
In one aspect the method comprises two treatment blocks, wherein the first treatment block treating the crops with Fluopyram is carried out as a pretreatment before seeding or transplanting, the second treatment block treating the crops with Paecilomyces lilacinus is carried out at or after transplanting, at emergence or when the plants are in the growth stage 11 to 24, preferably, 11 to 16, most preferably 12 to 14 or 20 to 24.
In one aspect the method comprises two treatment blocks, wherein the first treatment block treating the crops with Fluopyram is carried out as a pretreatment before seeding or transplanting, the second treatment block treating the crops with Paecilomyces lilacinus strain 251 is carried out at or after transplanting, at emergence or when the plants are in the growth stage 11 to 24, preferably, 11 to 16, most preferably 12 to 14 or 20 to 24.
treating the crops with Bacillus firmus strain, is carried out when the plants are in the growth stage 20 to 30, the last treatment block, which is the third treatment block, treating the crops with Bacillus firmus strain, is carried out when the plants are in the growth stage 50 to 80.
In the treatment block in which Fluopyram is used, this is applied at least once, for example 1, 2, 3, 4, 5, 6, 7 or 8 times, preferably 1, 2, 3, 4 or 5 times, more preferably 1, 2, 3 or 4 times, even more preferably, 1, 2, 3 times. The application frequency depends, inter alia, on the nematode pressure and/or on climatic conditions. For instance, weather conditions which promote nematode attack and proliferation might require more applications of Fluopyram than dry and hot weather. If there is more than one application of Fluopyram, the time interval between the single applications de- pends, inter alia, on the nematode pressure, the plant to be treated, weather conditions and can be determined by the skilled person. In general, the application frequency as well as the application rates will correspond to what is customary for the respective plant and the respective fungicide under the given conditions, with the exception that after a specific growth stage the treatment with the synthetic fungicide is replaced by a treatment with a BCA. If there is more than one application of the at least one synthetic nematicide, these may be carried out during different growth stages.
In the method of the invention, the single application rates of Fluopyram are from 50 to 750 g per ha, preferably from 100 to 500 g per ha, more preferably from 200 to 400 g per ha.

In the treatment block in which the at least one BCA selected from the group consisting of Paecilomyces lilacinus, Paecilomyces lilacinus strain 251, Bacillus firmus, Bacillus finnus strain 1-1582 is used, this is applied at least once, for example 1, 2, 3, 4, 5, 6, 7 or 8 times, preferably 1, 2, 3, 4, 5 or 6 times, more
preferably 1, 2, 3 or 4 times, even more preferably 2, 3 or 4 times and in particular 2 or 3 times. Like in the case of the application of Fluopyram, the application frequency depends, inter alia, on the nematode pressure and/or on climatic conditions. For instance, weather conditions which promote fungal attack and proliferation, such as extreme wetness, might require more applications of the BCA as defined above than dry and hot weather. If there is more than one application of the BCA as defined above, the time interval between the single applications depends, inter alia, on the pest pressure, the plant to be treated, weather conditions etc., and can be determined by the skilled person. In general, the application frequency as well as the application rates will correspond to what is customary for the respective plant and the respective BCA as defined above under the given conditions, with the exception that the treatment with the BCA as defined above starts only after the plant has reached a specific growth stage and after the treatment with Fluopyram has been completed. If there is more than one application of the BCA, these may be carried out during different growth stages.

In the method of the invention, the single application rates of Paecilomyces lilacinus or Paecilomyces lilacinus strain 251 are from 1 to 20 kg per ha, preferably from 2 to 15 kg per ha, more preferably from 2 to 8 kg per ha.

In the method of the invention, the single application rates of Paecilomyces lilacinus or Paecilomyces lilacinus strain 251 are from 0.2 to 20 g per 100 plants, preferably from 0.5 to 10 g per ha, more preferably from 1 to 5 g per ha.

In the method of the invention, the single application rates of Bacillus finnus or Bacillus finnus strain I-1582 are from 10 to 200 g per 1000 seeds, preferably from 20 to 150 g per 1000 seeds, more preferably from 25 to 100 g per 1000 seeds.

Fluopyram can be used as nematicidal compositions, comprising an effective amount of Fluopyram and at least one of the following: surfactant, solid or liquid diluent, characterized in that the surfactant or the diluent is normally used in nematicidal compositions. These nematicidal compositions may be prepared in a manner known per se. The present invention further provides formulations, and application forms prepared from them, as crop protection agents and/or pesticidal agents, such as drench, drip and spray liquors, comprising at least one of the active compounds of the invention. The application forms may comprise further crop protection agents and/or pesticidal agents, and/or activity-enhancing adjuvants such as penetrants, examples being vegetable oils such as, for example, rapeseed oil, sunflower oil, mineral oils such as, for example, liquid paraffins, alkyl esters of vegetable fatty acids, such as rapeseed oil or soybean oil methyl esters, or alkanol alkoxylates, and/or spreaders such as, for example, alkylsiloxanes and/or salts, examples being organic or inorganic ammonium or phosphonium salts, examples being ammonium sulphate or diammonium hydrogen phosphate, and/or retention promoters such as dioctyl sulphosuccinate or hydroxypropylguar polymers and/or humectants such as glycerol and/or fertilizers such as ammonium, potassium or phosphorous fertilizers, for example.

Examples of typical formulations include suspensions (SC, OD, FS), emulsifiable concen- trates (EC), emulsions (EW, EO, ES), pastes, pastilles, wettable powders or dusts (WP, SP, SS, WS, DP, OS) or granules (GR, FG, GG, MG), which can be water- soluble or wettable, as well as gel formulations for the treatment of plant propagation materials such as seeds (GF).

Usually the composition types (e. g. SC, OD, FS, EC, WG, SG, WP, SP, SS, WS, GF) are employed diluted. Composition types such as DP, OS, GR, FG, GG and MG are usually used undiluted;

These and other possible types of formulation are described, for example, by Crop Life International and in Pesticide Specifications, Manual on development and use of FAO and WHO specifications for pesticides, FAO Plant Production and Protection Papers - 173, prepared by the FAO/WHO Joint Meeting on Pesticide Specifications, 2004,ISBN: 9251048576. The formulations may comprise active agrochemical compounds other than one or more active compounds of the invention.

The formulations or application forms in question preferably comprise auxiliaries, such as extenders, solvents, spontaneity promoters, carriers, emulsifiers, dispersants, frost protectants, biocides, thickeners and/or other auxiliaries, such as adjuvants, for example. An adjuvant in this context is a component which enhances the biological effect of the formulation, without the component itself having a biological effect. Examples of adjuvants are agents which promote the retention, spreading, attachment to the leaf surface, or penetration.

These formulations are produced in a known manner, for example by mixing the active compounds with auxiliaries such as, for example, extenders, solvents and/or solid carriers and/or further auxiliaries, such as, for example, surfactants. The formulations are prepared either in suitable plants or else before or during the application.

Suitable for use as auxiliaries are substances which are suitable for imparting to the formulation of the active compound or the application forms prepared from these formulations (such as, e.g., usable crop protection agents, such as spray liquors or seed dressings) particular properties such as certain physical, technical and/or biological properties.

Suitable extenders are, for example, water, polar and nonpolar organic chemical liquids, for example from the classes of the aromatic and non-aromatic hydrocarbons (such as paraffins, alkylbenzenes, alkylnaphthalenes, chlorobenzenes), the alcohols and polyols (which, if appropriate, may also be substituted, etherified and/or esterified), the ketones (such as acetone, cyclohexanone), esters (including fats and oils) and (poly)ethers, the unsubstituted and substituted amines, amides, lactams (such as Nalkylpyrrolidones) and lactones, the sulphones and sulphoxides (such as dimethyl sulphoxide).

If the extender used is water, it is also possible to employ, for example, organic solvents as auxiliary solvents. Essentially, suitable liquid solvents are: aromatics such as xylene, toluene or alkylnaphthalenes, chlorinated aromatics and chlorinated aliphatic hydrocarbons such as chlorobenzenes, chloroethylenes or methylene chloride, aliphatic hydrocarbons such as cyclohexane or paraffins, for example petroleum fractions, mineral and vegetable oils, alcohols such as butanol or glycol and also their ethers and esters, ketones such as acetone, methyl ethyl ketone, methyl isobutyl ketone or cyclohexanone, strongly polar solvents such as dimethylformamide and dimethyl sulphoxide, and also water.

In principle it is possible to use all suitable solvents. Suitable solvents are, for example, aromatic hydrocarbons, such as xylene, toluene or alkylnaphthalenes, for example, chlorinated aromatic or aliphatic hydrocarbons, such as chlorobenzene, chloroethylene or methylene chloride, for example, aliphatic hydrocarbons, such as cyclohexane, for example, paraffins, petroleum fractions, mineral and vegetable oils, alcohols, such as methanol, ethanol, isopropanol, butanol or glycol, for example, and also their ethers and esters, ketones such as acetone, methyl ethyl ketone, methyl isobutyl ketone or cyclohexanone, for example, strongly polar solvents, such as dimethyl sulphoxide, and water.

All suitable carriers may in principle be used. Suitable carriers are in particular: for example, ammonium salts and ground natural minerals such as kaolins, clays, talc, chalk, quartz, attapulgite, montmorillonite or diatomaceous earth, and ground synthetic minerals, such as finely divided silica, alumina and natural or synthetic silicates, resins, waxes and/or solid fertilizers. Mixtures of such carriers may likewise be used. Carriers suitable for granules include the following: for example, crushed and fractionated natural minerals such as calcite, marble, pumice, sepiolite, dolomite, and also synthetic granules of inorganic and organic meals, and also granules of organic material such as sawdust, paper, coconut shells, maize cobs and tobacco stalks.

Liquefied gaseous extenders or solvents may also be used. Particularly suitable are those extenders or carriers which at standard temperature and under standard pressure are gaseous, examples being aerosol propellants, such as halogenated hydrocarbons, and also butane, propane, nitrogen and carbon dioxide. Examples of emulsifiers and/or foam-formers, dispersants or wetting agents having ionic or nonionic properties, or mixtures of these surface-active substances, are salts of polyacrylic acid, salts of lignosulphonic acid, salts of phenolsulphonic acid or naphthalenesulphonic acid, polycondensates of ethylene oxide with fatty alcohols or with fatty acids or with fatty amines, with substituted phenols (preferably alkylphenols or arylphenols), salts of sulphosuccinic esters, taurine derivatives 5 (preferably alkyltaurates), phosphoric esters ofpolyethoxylated alcohols or phenols, fatty acid esters of polyols, and derivatives of the compounds containing sulphates, sulphonates and phosphates, examples being Alkylaryl polyglycol ethers, alkylsulphonates, alkyl sulphates, arylsulphonates, protein hydrolysates, lignin-sulphite waste liquors and methylcellulose. The presence of a surface-active substance is advantageous if one of the active compounds and/or one of the inert carriers is not soluble in water and if application takes place in water.

Further auxiliaries that may be present in the formulations and in the application forms derived from them include colorants such as inorganic pigments, examples being iron oxide, titanium oxide, Prussian Blue, and organic dyes, such as alizarin dyes, azo dyes and metal phthalocyanine dyes, and nutrients and trace nutrients, such as salts of iron, manganese, boron, copper, cobalt, molybdenum and zinc.

Stabilizers, such as low-temperature stabilizers, preservatives, antioxidants, light stabilizers or other agents which improve chemical and/or physical stability may also be present. Additionally present may be foam-formers or defoamers.

Furthermore, the formulations and application forms derived from them may also comprise, as additional auxiliaries, stickers such as carboxymethylcellulose, natural and synthetic polymers in powder, granule or latex form, such as gum arabic, polyvinyl alcohol, polyvinyl acetate, and also natural phospholipids, such as cephalins and lecithins, and synthetic phospholipids. Further possible auxiliaries include mineral and vegetable oils.

There may possibly be further auxiliaries present in the formulations and the application forms derived from them. Examples of such additives include fragrances, protective colloids, binders, adhesives, thickeners, thixotropic substances, penetrants, retention promoters, stabilizers, sequestrants, complexing agents, humectants and spreaders. Generally speaking, the active compounds may be combined with any solid or liquid additive commonly used for formulation purposes.

Suitable retention promoters include all those substances which reduce the dynamic surface tension, such as dioctyl sulphosuccinate, or increase the viscoelasticity, such as hydroxypropylguar polymers, for example.

Suitable penetrants in the present context include all those substances which are typically used in order to enhance the penetration of active agrochemical compounds into plants. Penetrants in this context are defined in that, from the (generally aqueous) application liquor and/or from the spray coating, they areable to penetrate the cuticle of the plant and thereby increase the mobility of the active compounds in thecuticle. This property can be determined using the method described in the literature (Baur et al., 1997, Pesticide Science 51, 131-152). Examples include alcohol alkoxylates such as coconut fatty ethoxylate (10) or isotridecyl ethoxylate (12), fatty acid esters such as rapeseed or soybean oil methyl esters, fatty amine alkoxylates such as tallowamine ethoxylate (15), or ammonium and/or phosphonium salts such as ammonium sulphate or diammonium hydrogen phosphate, for example.

The formulations preferably comprise between 0.00000001% and 98% by weight of active compound or, with particular preference, between 0.01% and 95% by weight of active compound, more preferably between 0.5% and 90% by weight of active compound, based on the weight of the formulation.

The active compound content of the application forms (crop protection products) prepared from the formulations may vary within wide ranges. The active compound concentration of the application forms may be situated typically between 0.00000001% and 95% by weight of active compound, preferably between 0.00001% and 1% by weight, based on the weight of the application form. Application takes place in a customary manner adapted to the application forms.

The compounds are applied in a customary manner appropriate for the use forms.

The following are examples of formulations:

### Products for dilution with water

For seed treatment purposes, such products may be applied to the seed diluted or undiluted.

### Water-soluble concentrates (SL, LS)

10 parts by weight of the active compounds are dissolved in 90 parts by weight of wa- ter or a water-soluble solvent. As an alternative, wetting agents or other auxiliaries are added. The active compound dissolves upon dilution with water. A formulation having an active compound content of 10% by weight is obtained in this manner.

### Dispersible concentrates (DC)

20 parts by weight of the active compounds are dissolved in 70 parts by weight of cyclohexanone with addition of 10 parts by weight of a dispersant, for example polyvi- nylpyrrolidone. Dilution with water gives a dispersion. The active compound content is 20% by weight.

### Emulsifiable concentrates (EC)

15 parts by weight of the active compounds are dissolved in 75 parts by weight of xy- lene with addition of calcium dodecylbenzenesulfonate and castor oil ethoxylate (in each case 5 parts by weight). Dilution with water gives an emulsion. The formulation has an active compound content of 15% by weight.

### Emulsions (EW, EO, ES)

25 parts by weight of the active compounds are dissolved in 35 parts by weight of xy- lene with addition of calcium dodecylbenzenesulfonate and castor oil ethoxylate (in each case 5 parts by weight). This mixture is introduced into 30 parts by weight of water by means of an emulsifying machine (e.g. Ultraturrax) and made into a homogene- ous emulsion. Dilution with water gives an emulsion. The formulation has an active compound content of 25% by weight.

### Suspensions (SC, OD, FS)

In an agitated ball mill, 20 parts by weight of the active compounds are comminuted with addition of 10 parts by weight of dispersants and wetting agents and 70 parts by weight of water or an organic solvent to give a fine active compound suspension. Dilu- tion with water gives a stable suspension of the active compound. The active com- pound content in the formulation is 20% by weight.

### Water-dispersible granules and water-soluble granules (WG, SG)

50 parts by weight of the active compounds are ground finely with addition of 50 parts by weight of dispersants and wetting agents and prepared as water-dispersible or wa- ter-soluble granules by means of technical appliances (for example extrusion, spraytower, fluidized bed). Dilution with water gives a stable dispersion or solution of the active compound. The formulation has an active compound content of 50% by weight.

### Water-dispersible powders and water-soluble powders (WP, SP, SS, WS)

75 parts by weight of the active compounds are ground in a rotor-stator mill with addition of 25 parts by weight of dispersants and wetting agents as well as silica gel. Dilution with water gives a stable dispersion or solution of the active compound. The active compound content of the formulation is 75% by weight.

### Gel (GF)

In an agitated ball mill, 20 parts by weight of the active compounds are comminuted with addition of 10 parts by weight of dispersants, 1 part by weight of gelling agent wet- ters and 70 parts by weight of water or an organic solvent to give a fine suspension of the active compounds. Dilution with water gives a stable suspension of the active compounds having an active compound content of 20% by weight.

### Products to be applied undiluted Dustable powders (DP, OS)

5 parts by weight of the active compounds are ground finely and mixed intimately with 95 parts by weight of finely divided kaolin. This gives a dustable product having an active compound content of 5% by weight.

### Granules (GR, FG, GG, MG)

0.5 part by weight of the active compounds is ground finely and associated with 99.5 parts by weight of carriers. Current methods are extrusion, spray-drying or the fluidized bed. This gives granules to be applied undiluted having an active compound content of 0.5% by weight.

### ULV solutions (UL)

10 parts by weight of the active compounds are dissolved in 90 parts by weight of an organic solvent, for example xylene. This gives a product to be applied undiluted hav- ing an active compound content of 10% by weight.

In general, the formulations (agrochemical compositions) comprise from 0.01 to 95% by weight, preferably from 0.1 to 90% by weight and more preferably from 0.5 to 90% by weight, of the active compounds. The active compounds are employed in a purity of from 90% to 100%, preferably 95% to 100% (according to NMR spectrum).

Water-soluble concentrates (LS), flowable concentrates (FS), powders for dry treat- ment (OS), water-dispersible powders for slurry treatment (WS), water-soluble powders (SS), emulsions (ES) emulsifiable concentrates (EC) and gels (GF) are usually employed for the purposes of treatment of plant propagation materials, particularly seeds. These formulations can be applied to plant propagation materials, particularly seeds, diluted or undiluted. The formulations in question give, after two-to-tenfold dilution, ac- tive substance concentrations of from 0.01 to 60% by weight, preferably from 0.1 to 40% by weight, in the ready-to-use preparations. Application can be carried out before or during sowing. Methods for applying or treating with agrochemical compounds and compositions thereof, respectively, on to plant propagation material, especially seeds, are known in the art, and include dressing, coating, pelleting, dusting, soaking and in- furrow application methods of the propagation material. In a preferred embodiment, the active compounds or the compositions thereof, respectively, are applied on to the plant propagation material by a method such that germination is not induced, e. g. by seed dressing, pelleting, coating and dusting.

Also the BCAs can be converted into the customary types of agrochemical formula- tions, for example solutions, emulsions, suspensions, dusts, powders, pastes and granules. Preferably, they are used in the form of aqueous or alcoholic extracts.

In one aspect Fluopyram is provided as emulsifiable concentrates (EC), Water-dispersible granules (WG) or Emulsifiable concentrates (EC).

In one aspect the BCA selected from the group consisting of Paecilomyces lilacinus, Paecilomyces lilacinus strain 251, Bacillus firmus, Bacillus finnus strain 1-1582 is provided as Flowable Suspension Formulation suitable for seed treatment or Water-dispersible granules (WG).

The inventive treatment of the plants and plant parts with the compositions comprising Fluopyram or a BCA selected from the group consisting of Paecilomyces lilacinus, Paecilomyces lilacinus strain 251, Bacillus firmus, Bacillus finnus strain I-1582 is effected directly or by action on their surroundings, habitat or storage space by the customary treatment methods, for example by dipping, spraying, atomizing, irrigating, evaporating, dusting, fogging, broadcasting, foaming, painting, spreading-on, watering (drenching), drip irrigating, in-furrow application, soil injection, and, in the case of propagation material, especially in the case of seeds, also by dry seed treatment, wet seed treatment, slurry treatment, incrustation, coating with one or more coats, etc. It is also possible to deploy the mixtures or compositions by the ultra-low volume method or to inject the mixtures or compositions preparation or the compositions itself into the soil.

In one aspect preferred application methods are irrigating, watering (drenching), drip irrigating, in-furrow application, soil injection and, in the case of propagation material, especially in the case of seeds, also by dry seed treatment, wet seed treatment, slurry treatment, incrustation, coating with one or more coats

All plants and plant parts can be treated in accordance with the invention. Plants are understood here to mean all plants and plant populations, such as desired and undesired wild plants or crop plants (including naturally occurring crop plants). Crop plants may be plants which can be obtained by conventional breeding and optimization methods or by biotechnological and genetic engineering methods or combinations of these methods, including the transgenic plants and including the plant varieties which are protectable and non-protectable by plant breeders' rights. Parts of plants shall be understood to mean all above-ground and below-ground parts and organs of plants, such as shoot, leaf, flower and root, examples including leaves, needles, stems, trunks, flowers, fruit bodies, fruits and seeds, and also roots, tubers and rhizomes. The plant parts also include harvested material and vegetative and generative propagation material, for example cuttings, tubers, rhizomes, slips and seeds.

The inventive treatment of the plants and plant parts with the active ingredients is effected directly or by allowing them to act on the surroundings, habitat or storage space thereof by the customary treatment methods, for example by dipping, spraying, evaporating, fogging, scattering, painting on, injecting, and, in the case of propagation material, especially in the case of seeds, also by applying one or more coats.

As already mentioned above, it is possible to treat all plants and their parts in accordance with the invention. In a preferred embodiment, wild plant species and plant cultivars, or those obtained by conventional biological breeding methods, such as crossing or protoplast fusion, and also parts thereof, are treated. In a further preferred embodiment, transgenic plants and plant cultivars obtained by genetic engineering, if appropriate in combination with conventional methods (Genetically Modified Organisms), and parts thereof are treated. The terms "parts" or "parts of plants" or "plant parts" have been explained above.

More preferably, plants of the plant cultivars which are each commercially available or in use are treated in accordance with the invention. Plant cultivars are understood to mean plants having new properties ("traits") and which have been obtained by conventional breeding, by mutagenesis or by recombinant DNA techniques. They may be cultivars, biotypes and genotypes.

Depending on the plant species or plant cultivars, and the location and growth conditions (soils, climate, vegetation period, diet) thereof, the inventive treatment may also result in superadditive ("synergistic") effects. For example, possibilities include reduced application rates and/or broadening of the activity spectrum and/or an increase in the activity of the compounds and compositions usable in accordance with the invention, better plant growth, increased tolerance to high or low temperatures, increased tolerance to drought or to levels of water or soil salinity, enhanced flowering performance, easier harvesting, accelerated ripening, higher yields, higher quality and/or higher nutritional value of the harvested products, increased storage life and/or processibility of the harvested products, which exceed the effects normally to be expected.

The transgenic plants or plant cultivars (those obtained by genetic engineering) which are to be treated with preference in accordance with the invention include all plants which, through the genetic modification, received genetic material which imparts particular advantageous useful properties ("traits") to these plants. Examples of such properties are better plant growth, increased tolerance to high or low temperatures, increased tolerance to drought or to levels of water or soil salinity, enhanced flowering performance, easier harvesting, accelerated ripening, higher yields, higher quality and/or a higher nutritional value of the harvested products, better storage life and/or processibility of the harvested products. Further and particularly emphasized examples of such properties are an improved defence of the plants against animal and microbial pests, such as against insects, mites, phytopathogenic fungi, bacteria and/or viruses, and also increased tolerance of the plants to certain herbicidally active ingredients. Examples of transgenic plants include the important crop plants, such as cereals (wheat, rice), maize, soya, potatoes, sugar beet, tomatoes, peas and other vegetable types, cotton, tobacco, oilseed rape, and also fruit plants (with the fruits of apples, pears, citrus fruits and grapes), particular emphasis being given to maize, soya, potatoes, cotton, tobacco and oilseed rape. Traits that are particularly emphasized are improved defence of the plants against insects, arachnids, nematodes, slugs and snails by toxins formed in the plants, especially those formed in the plants by the genetic material from Bacillus thuringiensis (for example by the genes CryIA(a), CryIA(b), CryIA(c), CryIIA, CryIIIA, CryIIIB2, Cry9c, Cry2Ab, Cry3Bb and CryIF, and also combinations thereof) (referred to hereinafter as "Bt plants"). Traits that are also particularly emphasized are the improved defence of plants against fungi, bacteria and viruses by systemic acquired resistance (SAR), systemin, phytoalexins, elicitors and also resistance genes and correspondingly expressed proteins and toxins. Traits that are additionally particularly emphasized are the increased tolerance of the plants to certain active herbicidal ingredients, for example imidazolinones, sulphonylureas, glyphosate or phosphinothricin (for example the "PAT" gene). The genes which impart the desired traits in question may also be present in combinations with one another in the transgenic plants. Examples of "Bt plants" include maize varieties, cotton varieties, soya varieties and potato varieties which are sold under the trade names YIELD GARD® (for example maize, cotton, soya), KnockOut® (for example maize), StarLink® (for example maize), Bollgard® (cotton), Nucotn® (cotton) and NewLeaf® (potato). Examples of herbicide-tolerant plants include maize varieties, cotton varieties and soya varieties which are sold under the trade names Roundup Ready® (tolerance to glyphosate, for example maize, cotton, soya), Liberty Link® (tolerance to phosphinothricin, for example oilseed rape), IMI® (tolerance to imidazolinones) and STS® (tolerance to sulphonylureas, for example maize). Herbicide-resistant plants (plants bred in a conventional manner for herbicide tolerance) which may be mentioned include the varieties sold under the name Clearfield® (for example maize). Of course, these statements also apply to plant cultivars which have these genetic traits or genetic traits which are still to be developed and will be developed and/or marketed in the future.

Particularly useful transgenic plants which may be treated according to the invention are plants containing transformation events, or a combination of transformation events, and that are listed for example in the databases for various national or regional regulatory agencies including Event 531/ PV-GHBK04 (cotton, insect control, described in WO 2002/040677), Event 1143-14A (cotton, insect control, not deposited, described in WO 06/128569); Event 1143-51B (cotton, insect control, not deposited, described in WO 06/128570); Event 1445 (cotton, herbicide tolerance, not deposited, described in US-A 2002-120964 or WO 02/034946Event 17053 (rice, herbicide tolerance, deposited as PTA-9843, described in WO 10/117737); Event 17314 (rice, herbicide tolerance, deposited as PTA-9844, described in WO 10/117735); Event 281-24-236 (cotton, insect control - herbicide tolerance, deposited as PTA-6233, described in WO 05/103266 or US-A 2005-216969); Event 3006-210-23 (cotton, insect control - herbicide tolerance, deposited as PTA-6233, described in US-A 2007-143876 or WO 05/103266); Event 3272 (corn, quality trait, deposited as PTA-9972, described in WO 06/098952 or US-A 2006-230473); Event 33391 (wheat, herbicide tolerance, deposited as PTA-2347, described in WO 2002/027004), Event 40416 (corn, insect control - herbicide tolerance, deposited as ATCC PTA-11508, described in WO 11/075593); Event 43A47 (corn, insect control - herbicide tolerance, deposited as ATCC PTA-11509, described in WO 11/075595); Event 5307 (corn, insect control, deposited as ATCC PTA-9561, described in WO 10/077816); Event ASR-368 (bent grass, herbicide tolerance, deposited as ATCC PTA-4816, described in US-A 2006-162007 or WO 04/053062); Event B16 (corn, herbicide tolerance, not deposited, described in US-A 2003-126634); Event BPS-CV127-9 (soybean, herbicide tolerance, deposited as NCIMB No. 41603, described in WO 10/080829); Event BLR1 (oilseed rape, restoration of male sterility, deposited as NCIMB 41193, described in WO 2005/074671), Event CE43-67B (cotton, insect control, deposited as DSM ACC2724, described in US-A 2009-217423 or WO 06/128573); Event CE44-69D (cotton, insect control, not deposited, described in US-A 2010-0024077); Event CE44-69D (cotton, insect control, not deposited, described in WO 06/128571); Event CE46-02A (cotton, insect control, not deposited, described in WO 06/128572); Event COT102 (cotton, insect control, not deposited, described in US-A 2006-130175 or WO 04/039986); Event COT202 (cotton, insect control, not deposited, described in US-A 2007-067868 or WO 05/054479); Event COT203 (cotton, insect control, not deposited, described in WO 05/054480); ); Event DAS21606-3 / 1606 (soybean, herbicide tolerance, deposited as PTA-11028, described in WO 012/033794), Event DAS40278 (corn, herbicide tolerance, deposited as ATCC PTA-10244, described in WO 11/022469); Event DAS-44406-6 / pDAB8264.44.06.1 (soybean, herbicide tolerance, deposited as PTA-11336, described in WO 2012/075426), Event DAS-14536-7 /pDAB8291.45.36.2 (soybean, herbicide tolerance, deposited as PTA-11335, described in WO 2012/075429), Event DAS-59122-7 (corn, insect control - herbicide tolerance, deposited as ATCC PTA 11384 , described in US-A 2006-070139); Event DAS-59132 (corn, insect control - herbicide tolerance, not deposited, described in WO 09/100188); Event DAS68416 (soybean, herbicide tolerance, deposited as ATCC PTA-10442, described in WO 11/066384 or WO 11/066360); Event DP-098140-6 (corn, herbicide tolerance, deposited as ATCC PTA-8296, described in US-A 2009-137395 or WO 08/112019); Event DP-305423-1 (soybean, quality trait, not deposited, described in US-A 2008-312082 or WO 08/054747); Event DP-32138-1 (corn, hybridization system, deposited as ATCC PTA-9158, described in US-A 2009-0210970 or WO 09/103049); Event DP-356043-5 (soybean, herbicide tolerance, deposited as ATCC PTA-8287, described in US-A 2010-0184079 or WO 08/002872); Event EE-1 (brinjal, insect control, not deposited, described in WO 07/091277); Event FI117 (corn, herbicide tolerance, deposited as ATCC 209031, described in US-A 2006-059581 or WO 98/044140); Event FG72 (soybean, herbicide tolerance, deposited as PTA-11041, described in WO 2011/063413), Event GA21 (corn, herbicide tolerance, deposited as ATCC 209033, described in US-A 2005-086719 or WO 98/044140); Event GG25 (corn, herbicide tolerance, deposited as ATCC 209032, described in US-A 2005-188434 or WO 98/044140); Event GHB119 (cotton, insect control - herbicide tolerance, deposited as ATCC PTA-8398, described in WO 08/151780); Event GHB614 (cotton, herbicide tolerance, deposited as ATCC PTA-6878, described in US-A 2010-050282 or WO 07/017186); Event GJ11 (corn, herbicide tolerance, deposited as ATCC 209030, described in US-A 2005-188434 or WO 98/044140); Event GM RZ13 (sugar beet, virus resistance , deposited as NCIMB-41601, described in WO 10/076212); Event H7-1 (sugar beet, herbicide tolerance, deposited as NCIMB 41158 or NCIMB 41159, described in US-A 2004-172669 or WO 04/074492); Event JOPLIN1 (wheat, disease tolerance, not deposited, described in US-A 2008-064032); Event LL27 (soybean, herbicide tolerance, deposited as NCIMB41658, described in WO 06/108674 or US-A 2008-320616); Event LL55 (soybean, herbicide tolerance, deposited as NCIMB 41660, described in WO 06/108675 or US-A 2008-196127); Event LLcotton25 (cotton, herbicide tolerance, deposited as ATCC PTA-3343, described in WO 03/013224 or US-A 2003-097687); Event LLRICE06 (rice, herbicide tolerance, deposited as ATCC 203353, described in US 6,468,747 or WO 00/026345); Event LLRice62 ( rice, herbicide tolerance, deposited as ATCC 203352, described in WO 2000/026345), Event LLRICE601 (rice, herbicide tolerance, deposited as ATCC PTA-2600, described in US-A 2008-2289060 or WO 00/026356); Event LY038 (corn, quality trait, deposited as ATCC PTA-5623, described in US-A 2007-028322 or WO 05/061720); Event MIR162 (corn, insect control, deposited as PTA-8166, described in US-A 2009-300784 or WO 07/142840); Event MIR604 (corn, insect control, not deposited, described in US-A 2008-167456 or WO 05/103301); Event MON15985 (cotton, insect control, deposited as ATCC PTA-2516, described in US-A 2004-250317 or WO 02/100163); Event MON810 (corn, insect control, not deposited, described in US-A 2002-102582); Event MON863 (corn, insect control, deposited as ATCC PTA-2605, described in WO 04/011601 or US-A 2006-095986); Event MON87427 (corn, pollination control, deposited as ATCC PTA-7899, described in WO 11/062904); Event MON87460 (corn, stress tolerance, deposited as ATCC PTA-8910, described in WO 09/111263 or US-A 2011-0138504); Event MON87701 (soybean, insect control, deposited as ATCC PTA-8194, described in US-A 2009-130071 or WO 09/064652); Event MON87705 (soybean, quality trait - herbicide tolerance, deposited as ATCC PTA-9241, described in US-A 2010-0080887 or WO 10/037016); Event MON87708 (soybean, herbicide tolerance, deposited as ATCC PTA-9670, described in WO 11/034704); Event MON87712 (soybean, yield, deposited as PTA-10296, described in WO 2012/051199), Event MON87754 (soybean, quality trait, deposited as ATCC PTA-9385, described in WO 10/024976); Event MON87769 (soybean, quality trait, deposited as ATCC PTA-8911, described in US-A 2011-0067141 or WO 09/102873); Event MON88017 (corn, insect control - herbicide tolerance, deposited as ATCC PTA-5582, described in US-A 2008-028482 or WO 05/059103); Event MON88913 (cotton, herbicide tolerance, deposited as ATCC PTA-4854, described in WO 04/072235 or US-A 2006-059590); Event MON88302 (oilseed rape, herbicide tolerance, deposited as PTA-10955, described in WO 2011/153186), Event MON88701 (cotton, herbicide tolerance, deposited as PTA-11754, described in WO 2012/134808), Event MON89034 (corn, insect control, deposited as ATCC PTA-7455, described in WO 07/140256 or US-A 2008-260932); Event MON89788 (soybean, herbicide tolerance, deposited as ATCC PTA-6708, described in US-A 2006-282915 or WO 06/130436); Event MS11 (oilseed rape, pollination control - herbicide tolerance, deposited as ATCC PTA-850 or PTA-2485, described in WO 01/031042); Event MS8 (oilseed rape, pollination control - herbicide tolerance, deposited as ATCC PTA-730, described in WO 01/041558 or US-A 2003-188347); Event NK603 (corn, herbicide tolerance, deposited as ATCC PTA-2478, described in US-A 2007-292854); Event PE-7 (rice, insect control, not deposited, described in WO 08/114282); Event RF3 (oilseed rape, pollination control - herbicide tolerance, deposited as ATCC PTA-730, described in WO 01/041558 or US-A 2003-188347); Event RT73 (oilseed rape, herbicide tolerance, not deposited, described in WO 02/036831 or US-A 2008-070260); Event SYHT0H2 / SYN-000H2-5 (soybean, herbicide tolerance, deposited as PTA-11226, described in WO 2012/082548), Event T227-1 (sugar beet, herbicide tolerance, not deposited, described in WO 02/44407 or US-A 2009-265817); Event T25 (corn, herbicide tolerance, not deposited, described in US-A 2001-029014 or WO 01/051654); Event T304-40 (cotton, insect control - herbicide tolerance, deposited as ATCC PTA-8171, described in US-A 2010-077501 or WO 08/122406); Event T342-142 (cotton, insect control, not deposited, described in WO 06/128568); Event TC1507 (corn, insect control - herbicide tolerance, not deposited, described in US-A 2005-039226 or WO 04/099447); Event VIP1034 (corn, insect control - herbicide tolerance, deposited as ATCC PTA-3925., described in WO 03/052073), Event 32316 (corn, insect control-herbicide tolerance, deposited as PTA-11507, described in WO 11/084632), Event 4114 (corn, insect control-herbicide tolerance, deposited as PTA-11506, described in WO 11/084621), event EE-GM3 / FG72 (soybean, herbicide tolerance, ATCC Accession N° PTA-11041, WO 2011/063413A2), event DAS-68416-4 (soybean, herbicide tolerance, ATCC Accession N° PTA-10442, WO2 011/066360A1), event DAS-68416-4 (soybean, herbicide tolerance, ATCC Accession N° PTA-10442, WO 2011/066384A1), event DP-040416-8 (corn, insect control, ATCC Accession N° PTA-11508, WO 2011/075593A1), event DP-043A47-3 (corn, insect control, ATCC Accession N° PTA-11509, WO 2011/075595A1), event DP-004114-3 (corn, insect control, ATCC Accession N° PTA-11506, WO 2011/084621A1), event DP-032316-8 (corn, insect control, ATCC Accession N° PTA-11507, WO 2011/084632A1), event MON-88302-9 (oilseed rape, herbicide tolerance, ATCC Accession N° PTA-10955, WO 2011/153186A1), event DAS-21606-3 (soybean, herbicide tolerance, ATCC Accession No. PTA-11028, WO 2012/033794A2), event MON-87712-4 (soybean, quality trait, ATCC Accession N°. PTA-10296, WO 2012/051199A2), event DAS-44406-6 (soybean, stacked herbicide tolerance, ATCC Accession N°. PTA-11336, WO 2012/075426A1), event DAS-14536-7 (soybean, stacked herbicide tolerance, ATCC Accession N°. PTA-11335, WO 2012/075429A1), event SYN-000H2-5 (soybean, herbicide tolerance, ATCC Accession N°. PTA-11226, WO 2012/082548A2), event DP-061061-7 (oilseed rape, herbicide tolerance, no deposit N° available, WO 2012071039A1), event DP-073496-4 (oilseed rape, herbicide tolerance, no deposit N° available, US2012131692), event 8264.44.06.1 (soybean, stacked herbicide tolerance, Accession N° PTA-11336, WO 2012075426A2), event 8291.45.36.2 (soybean, stacked herbicide tolerance, Accession N°. PTA-11335, WO 2012075429A2), event SYHT0H2 (soybean, ATCC Accession N°. PTA-11226, WO 2012/082548A2), event MON88701 (cotton, ATCC Accession N° PTA-11754, WO 2012/134808A1), event KK179-2 (alfalfa, ATCC Accession N° PTA-11833, WO2013003558A1), event pDAB8264.42.32.1 (soybean, stacked herbicide tolerance, ATCC Accession N° PTA-11993, WO 2013010094A1), event MZDT09Y (corn, ATCC Accession N° PTA-13025, WO 2013012775A1), event KK179-2 (alfalfa, ATCC Accession N° PTA-11833, WO2013003558A1), event pDAB8264.42.32.1 (soybean, stacked herbicide tolerance, ATCC Accession N° PTA-1 1993, WO2013010094A1), event MZDT09Y (corn, ATCC Accession N° PTA- 13025, WO2013012775A1), event VCO-01981-5 (corn, herbicide tolerance, NCIMB Accession N° 41842, WO2013014241A1), event DAS-81419-2 X DAS-68416-4 (soybean stacked insect resistance and herbicide tolerance, ATCC Accession N° PTA- 10442, WO2013016516A1), event DAS-81419-2 (soybean stacked insect resistance and herbicide tolerance, ATCC Accession N° PTA-12006, WO2013016527A1), event HCEM485 (corn, herbicide tolerance, ATCC Accession N° PTA-12014, WO2013025400A1), event pDAB4468.18.07.1 (cotton, herbicide tolerance, ATCC Accession N° PTA-12456, WO2013112525A2), event pDAB4468.19.10.3 (cotton, herbicide tolerance, ATCC Accession N° PTA-12457, WO2013112527A1).

The various aspects of the invention will now be illustrated with reference to the following examples in a non limiting manner.

### Examples

Cucumber (Cucumis sativus) of the variety Alans was transplanted in a greenhouse trial in Los Palacios y Villafrance, Sevilla Province, Spain on May 12th 2014. The crop had one true leaf at transplanting timing (BBCH 11).

2 days after transplanting, Fluopyram was applied along the planted rows onto soil, using drip irrigation system. Fluopyram was used as a Soluble Concentrate (SC) formulation with a concentration of 400 g/l active ingredient. The product was tested at a rate of 250 g of active ingredient /ha. The crop had still one true leaf at the timing of application (BBCH 11).

11 days after transplanting BioAct was applied along the planted rows onto soil, using drip irrigation system. BioAct was used as a Dispersible Concentrate (DC) formulation with a concentration of 216 g/l active ingredient. The product was tested at a rate of 162 g of active ingredient /ha. The crop had four true leaves at the timing of application (BBCH 14).

Furthermore BioAct was applied a second time in the same way 30 days after transplanting at a crop stage of BBCH 61 (begin of flowering).

The percentage of damaged roots - caused by the root knot nematode Meloidogyne incognita - was assessed by visual inspection at two times after application.

| | % root damage 44 days after transplanting | % root damage 59 days after transplanting |
|---|---|---|
| | | |
| untreated control | 58 | 86 |
| Fluopyram SC400 | 22 | 57 |
| Fluopyram SC400 follow by Paecilomyces lilacinus strain 251 (BioAct DC216) | 19 | 46 |

## Claims

1. A method for controlling phytopathogenic nematodes, which method comprises subjecting plants to be protected against nematode attack to two or more sequential treatment blocks,
where at least one treatment block comprises subjecting the plants to at least one treatment with Fluopyram and at least one treatment block comprises subjecting the plants to at least one treatment with at least one biological control agent selected from the group consisting of Paecilomyces lilacinus, Paecilomyces lilacinus strain 251, Bacillus firmus, Bacillus firmus strain 1-1582, with the proviso that the last treatment block comprises subjecting the plants to at least one treatment with at least one biological control agent selected from the group consisting of Paecilomyces lilacinus, Paecilomyces lilacinus strain 251, Bacillus firmus, Bacillus firmus strain 1-1582.

2. The method according to claim 1, where the respective treatment blocks are carried out during different growth stages of the plants.

3. The method according to claim 1 or 2, which comprises subjecting plants to be protected against nematode attack to two sequential treatment blocks, where the first treatment block comprises subjecting the plants to at least one treatment Fluopyram and the second, subsequent treatment block comprises subjecting the plants to at least one treatment with at least one biological control agent selected from the group consisting of Paecilomyces lilacinus, Paecilomyces lilacinus strain 251, Bacillus firmus, Bacillus firmus strain 1-1582.

4. The method according to claim 1 or 2, which comprises subjecting plants to be protected against nematode attack to two sequential treatment blocks, where the first treatment block comprises subjecting the plants to at least one treatment with at least one biological control agent selected from the group consisting of Paecilomyces lilacinus, Paecilomyces lilacinus strain 251, Bacillus firmus, Bacillus firmus strain I-1582and the second, subsequent treatment block comprises subjecting the plants to at least one treatment with Fluopyram.

5. The method according to any of claims 1 to 4, where the first treatment block ends is a pretreatment or ends latest when the plants have reached growth stage 10 and the last treatment block begins earliest when the plants are transplanted or emerged or in growth stage 11, according to BBCH extended scale.
